# EUROPEAN PATENT APPLICATION

(11) **EP 3 617 252 A1**
(43) Date of publication of application: **04.03.2020**
(21) Application number: 18306148.0
(22) Date of filing: 29.08.2018
(51) Int. Cl.: C08G 77/388, C08L 83/08

(54) **POLYSILOXANES BEARING ISOCYANURIC ACID OR BARBITURIC ACID MOIETIES AND COMPOSITIONS COMPRISING THEM**

(71) Applicant: RHODIA OPERATIONS, 75009 Paris (FR)
(72) Inventor: LANDELLE, Grégory, 69110 Sainte-Foy-Lès-Lyon (FR); AL RAHAL AL ORABI, Rabih, 69006 Lyon (FR); VERGELATI, Caroll, 38118 Saint Baudille de la Tour (FR); TOURAUD, Franck, Eyzin Pinet (FR)
(74) Representative: Roussel, Sandrine

(57) **Abstract**

The present invention relates to processes for preparing polysiloxanes bearing isocyanuric or babrbituric acid moieties and to compositions comprising said polysiloxanes and polysiloxanes bearing nitrogen-containing heterocyclic group, bearing at least a function chosen in the group consisting of primary amine and secondary amine.

## Description

The present invention relates to polysiloxanes bearing isocyanuric acid or barbituric acid moieties and to processes for preparing them. The invention also pertains to compositions comprising said polysiloxanes and polysiloxanes bearing nitrogen-containing heterocyclic group, bearing at least a function chosen in the group consisting of primary amine and secondary amine.

The presence of H-bond donor and H-bond acceptor moieties onto polymer backbone may result in hydrogen bondings between the polymer chains that may confer new properties to the so formed supramolecular assembly.

US8575291 discloses polydimethylsiloxane (PDMS) bearing functional group having atomic groups capable of forming hydrogen bonding such as thymine group. According to the authors thymine is responsible, through self-association, for hydrogen bondings between the polysiloxane chains leading to the formation of a supramolecular network finally resulting in a thermoplastic silicone resin. The supramolecular assembly is solid at 25°C and becomes liquid at relatively low temperatures of 55°C-65°C. The authors noticed that heating of such supramolecular assembly is often accompanied with a yellowing which is characteristic of thermal degradation detrimental to a reuse of the product. US7622131 discloses PDMS containing self-complementary quadruple hydrogen bonding groups, namely pyrimidine group having an urea link. These polymers are, depending on the nature of the substituent and on the nature of the backbone (telechelic polymer or comblike copolymers), clear sticky, clear elastic, clear glassy or white gummy materials resulting from the reversible association of the polysiloxane chains via hydrogen bondings. Nothing is said about the thermal stability of the urea and of the pyrimidine group.

E.M.Maya et al., disclose the formation of a thermoset polydimethylsiloxane obtained by the cyclotrimerization of a cyanate group to a cyanurate structure. Accordingly, the rubbery material is an irreversibly crosslinked material, having a glass transition ranging from -43°C to 15°C, which can be reuse after melting. US3892643 relates to a thermally curable composition comprising an isocyanuric acid compound such as trialkenyl isocyanurates. Resulting materials are also irreversibly crosslinked.

US20150166847 relates to a thermosetting resin composition including a diglycidyl isocyanuryl modified polysiloxane that may be crosslinked using an acid anhydride-based curing agent. Crosslinking is not reversible and the material is thermoset not thermoplastic.

US4855378 relates to an organopolysiloxane composition which may be crosslinked via an addition of Si-bonded hydrogen with Si-C bonded vinyl groups which can be an alkenylisocyanurate moiety to give elastomeric material. Hydrosilylation reaction is not reversible and the material is thus not thermoplastic.

M.Weck et al. disclose in Macromolecules, 2008, 41 (10), 3429 the synthesis of polynorbonene backbone bearing some isocyanuric acid side groups (ICA). The resulting polymers can be reversibly crosslinked by adding ditopic diaminotriazine (DAT) crosslinking agent to give a gel having elastic properties for temperature as high as 80°C. The association via hydrogen bonds are represented as follow :

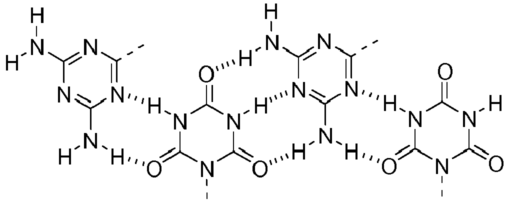

However the values of the modulus measured for these materials are rather low and do not exceeding 10000 Pa.

According to the previously described prior art, there is a need for a polysiloxane backbone comprising H-bond donor and H-bond acceptor groups not capable of self-association but capable of giving supramolecular association when mixed with another polymer bearing complementary H-bond donor and H-bond acceptor groups. There is a need for a polysiloxane backbone comprising H-bond donor and H-bond acceptor groups capable of giving reversible hydrogen bonding with a polymer backbone bearing complementary H-bond donor and H-bond acceptor groups to give a thermoplastic material having a large range of temperature of use. There is a need for a thermoplastic composition comprising a polysiloxane backbone comprising H-bond donor and H-bond acceptor groups and another polymer bearing complementary H-bond donor and H-bond acceptor groups which gives a thermoplastic material having a modulus that can be tune easily.There is a need for such material having high thermal stability. There is a need for such material that is inherently self-healing material.

All these needs and others are fulfilled by a polysiloxane (P1) corresponding to formula (A) or (B) : 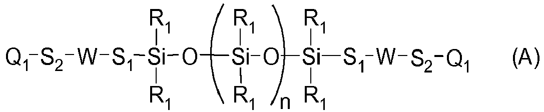 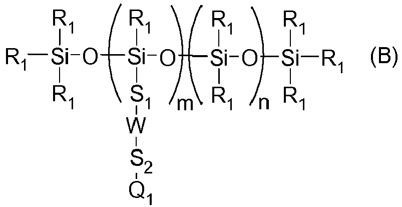
wherein each R₁ is independently selected from C₁-C₂₀ hydrocarbyl groups optionally substituted by a perfluoroalkyl group and,
wherein S₁ and S₂ which may be the same or different are nil or C₁-C₄₀ hydrocarbylene groups optionally interrupted by one or more heteroatom(s) or heteroatom-containing group(s) chosen from the list consisting of -O-, -S-,-(C=O)-, -(C=S)-, -CO-NH-, -NH-CO-O- and -NH-CO-NH- and,
wherein W is a divalent group selected from the list consisting of -CH₂-CH₂-,-*S-CH₂-CH₂-, -*CH₂-CH₂-S-, -*NH(C=O)-, -(*C=O)NH-, -*NR(C=O)-,-(*C=O)NR-, -(*C=O)O-, -*O(C=O)- , -*NH-CO-O-, -NH-CO-O*- and -NH-CO-NH- wherein the atom designed with * is linked to S₁ and wherein R is a C₁-C₈ alkyl group and,
wherein Q₁ is an isocyanuric or a barbituric acid moiety corresponding to formula (C): 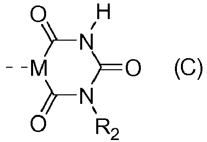 wherein 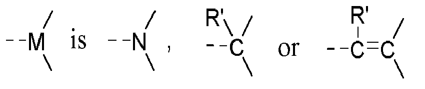 and,

wherein R' is H or a C₁-C₈ alkyl group and,
wherein R₂ is H or a C₁-C₂₀ hydrocarbyl group or a -(C=O)-R" moiety with R" being a C₁-C₂₀ hydrocarbyl group and,
wherein n is an integer ranging from 5 to 4000 and,
wherein m is an integer such as the ratio n/m is ranging from 500 to 2.

Each R₁ is independently selected from C₁-C₂₀ hydrocarbyl groups. In some embodiments, each R₁ is independently selected from C₁-C₂₀ hydrocarbyl groups optionally substituted by a perfluoroalkyl group. By hydrocarbyl group is meant univalent group comprising only carbon and hydrogen atoms formed by removing a hydrogen atom from a hydrocarbon. The hydrocarbyl group can be saturated or unsaturated, linear, branched or cyclic. When the hydrocarbyl group is cyclic it may be an aryl group formed by removing a hydrogen atom from an aromatic hydrocarbon i.e. from a cyclic conjugated unsaturated hydrocarbon ring having a number of delocalized π electrons following the Huckel rule. By perfluoroalkyl group is meant any alkyl group in which each H atom is replaced by F atom. Hydrocarbyl group R₁ is advantageously an alkyl or an aryl group. Without being exhaustive suitable alkyl group may be chosen among the list consisting of methyl, ethyl, n-propyl, iso-propyl, n-butyl, tert-butyl, sec-butyl, isobutyl, hexyl, cyclohexyl, heptyl, n-octyl, dodecyl, tetradecyl, hexadecyl and octadecyl groups. Suitable aryl groups may be optionally substituted phenyl group. Good results were obtained with R₁ being phenyl group. In a preferred embodiment R₁ is an alkyl group and more preferably a methyl group.

Just as matter of example the polysiloxanes represented in figures **(I)** to **(XVIII)** below are examples of polysiloxane (P1) according to the present invention : 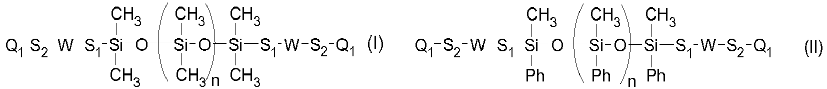 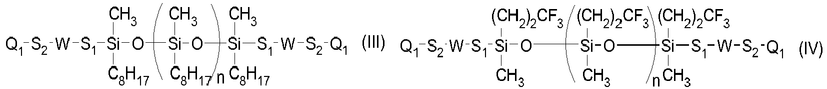 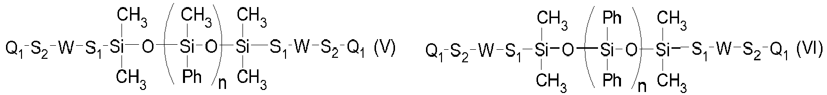 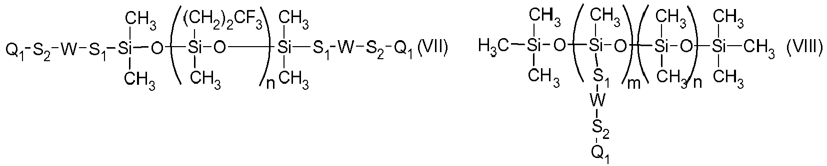 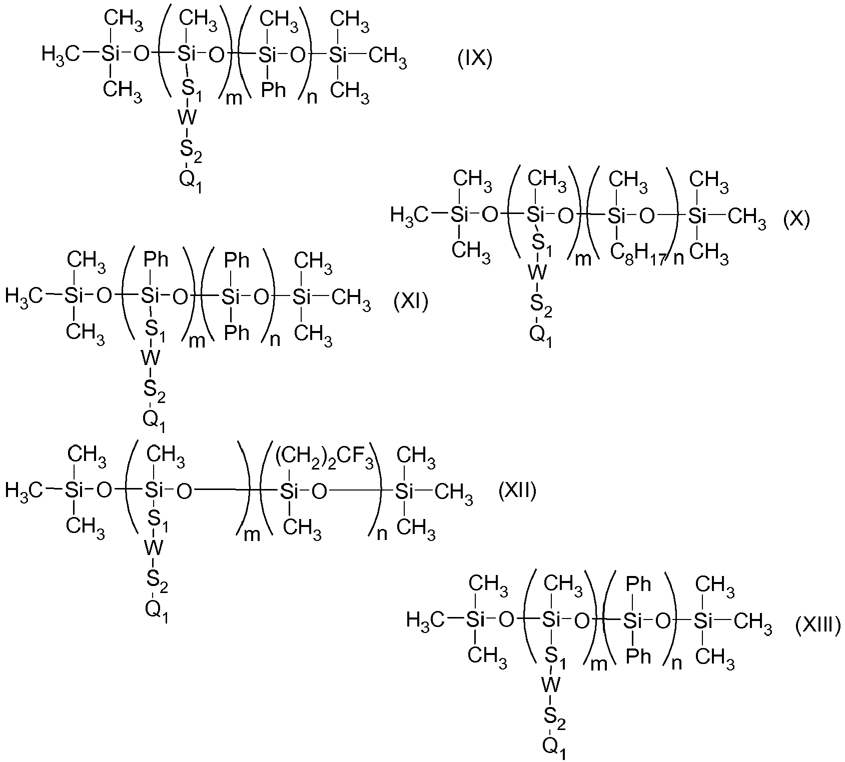 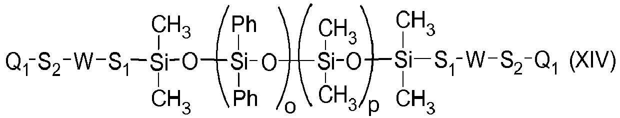 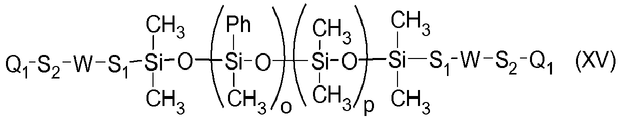 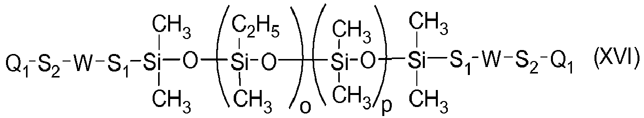 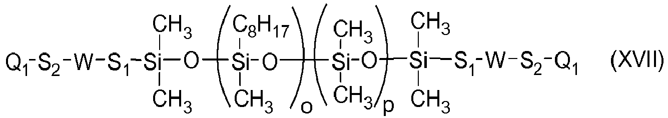 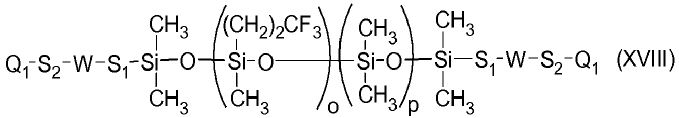 wherein for polysiloxanes according to figures (XIV) to (XVIII) o and p are integers such that o + p = n, with n as defined above.

R₂ is generally H or a C₁-C₂₀ hydrocarbyl group or a -(C=O)-R' moiety with R' being a C₁-C₂₀ hydrocarbyl group. R₂ is preferably H or a C₁-C₂₀ hydrocarbyl group. In some embodiments, R₂ is a -(C=O)-R' moiety with R' being a C₁-C₂₀ hydrocarbyl group. When R₂ is a -(C=O)-R' moiety, it is preferably an acetyl moiety -CO-CH₃. R₂ is advantageously an alkyl group. Without being exhaustive suitable alkyl group may be chosen among the list consisting of methyl, ethyl, n-propyl, iso-propyl, n-butyl, tert-butyl, sec-butyl, isobutyl, hexyl, cyclohexyl, heptyl, n-octyl. Good results were obtained with R₂ equals to H.

W is generally selected from the list consisting of -CH₂-CH₂-, -*S-CH₂-CH₂-,-*CH₂-CH₂-S-, -*NH(C=O)-, -(*C=O)NH-, -*NR(C=O)-, -(*C=O)NR-, -(*C=O)O-, -*O(C=O)-, -*NH-CO-O-, -NH-CO-O*- and -NH-CO-NH- wherein the atom designed with * is linked to S₁ and wherein R is a C₁-C₈ alkyl group. Preferably W is selected from the list consisting of -CH₂-CH₂-, -*S-CH₂-CH₂-, -*CH₂-CH₂-S-, -*NH(C=O)-, -(*C=O)NH-, more preferably from the list consisting of -CH₂-CH₂-, -*S-CH₂-CH₂- and -*NH(C=O)-. Good results were obtained with W being-*NH(C=O)-.

S₁ is generally nil or a C₁-C₄₀ hydrocarbylene group optionally interrupted by one or more heteroatoms or heteroatom-containing groups. One has to understand that when S₁ is nil mean that S₁ has to be replaced by a single bond in the corresponding formula. By hydrocarbylene group is meant divalent group comprising only carbon and hydrogen atoms formed by removing two hydrogen atoms from a hydrocarbon, the free valencies of which are not involved in a double bond. The hydrocarbylene group can be saturated or unsaturated, linear, branched or cyclic. When the hydrocarbylene group is cyclic it may be an aryl group formed by removing two hydrogen atoms from an aromatic ring i.e. from a cyclic conjugated unsaturated hydrocarbon ring having a number of delocalized π electrons following the Huckel rule. The term aromatic ring encompasses also polycyclic aromatic compounds. In the polycyclic aromatic compounds, the rings can be fused or they can be linked by C-C linkage or by a spiro linkage. When the hydrocarbylene group is interrupted by one or more heteroatoms or heteroatom-containing groups it can be interrupted by one or more ether linkage -O-, one or more thioether linkage -S-, one or more carbonyl linkage -(C=O)-, one or more thiocarbonyl linkage -(C=S)-, one or more amide linkage -CO-NH-, one or more carbamate linkage -NH-CO-O- or one or more urea linkage -NH-CO-NH-.

S₁ is preferably a C₁-C₄₀ hydrocarbylene group, more preferably S₁ is -(CH₂)_{q}-with q ranging from 1 to 12 and even more preferably S₁ is -(CH₂)₃-. In some other preferred embodiments S₁ is nil.

S₂ is generally nil or a C₁-C₄₀ hydrocarbylene group optionally interrupted by one or more heteroatoms or heteroatom-containing groups as previously described for S₁.

S₂ is preferably a C₁-C₄₀ hydrocarbylene group, more preferably S₂ is -(CH₂)_{q}-with q ranging from 1 to 12 and even more preferably S₂ is -(CH₂)-.

In some preferred embodiments, S₁ is nil and S₂ is -CH₂-.

In some other preferred embodiments, S₁ is -(CH₂)₃- and S₂ is -CH₂-.

In some still preferred embodiments, R₂ is H, W is -CH₂-CH₂-, S₁ is nil and S₂ is -CH₂- while R₁ is as previously defined.

In some more preferred embodiments, R₂ is H, W is -CH₂-CH₂-, S₁ is nil and S₂ is -CH₂- while R₁ is -CH₃. Thus, examples of polysiloxanes (PI) according to the invention are represented by formulae (A₁), (A'₁) (with R'=H), (B₁) and (B'₁) (with R'=H) below :

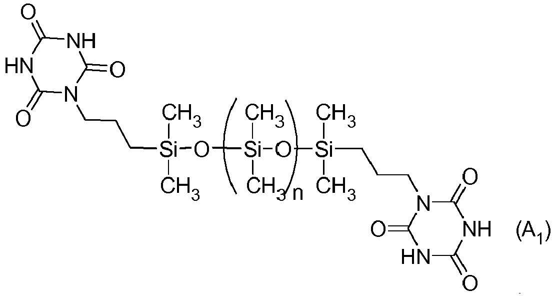

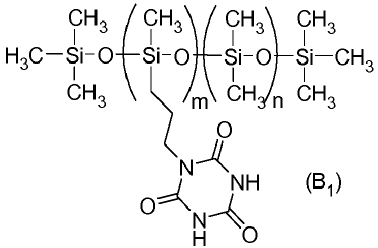

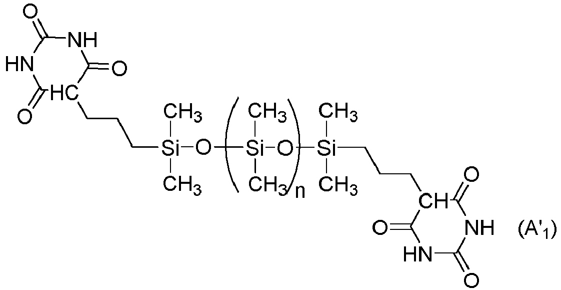

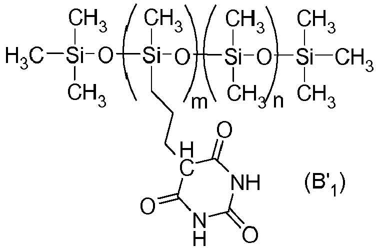

In some other preferred embodiments, R₂ is H, W is -*S-CH₂-CH₂-, S₁ is-(CH₂)₃- and S₂ is -CH₂- while R₁ is as previously defined.

In some more preferred embodiments, R₂ is H, W is -*S-CH₂-CH₂-, S₁ is-(CH₂)₃- and S₂ is -CH₂- while R₁ is -CH₃. Thus, examples of polysiloxanes (PI) according to the invention are represented by formulae (A₂), (A'₂) (with R'=H), (B₂) and (B'₂) (with R'=H) below :

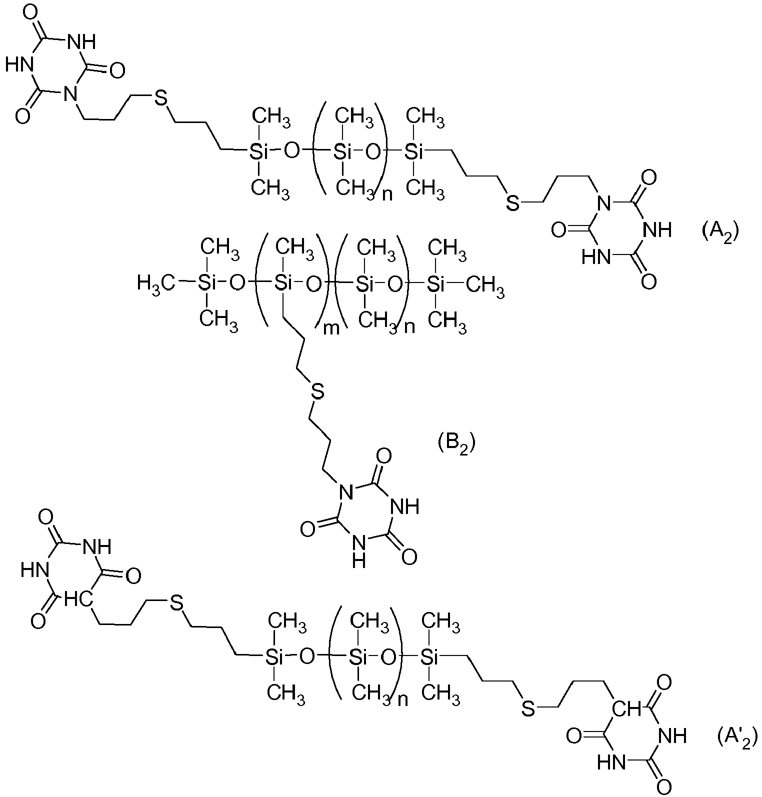

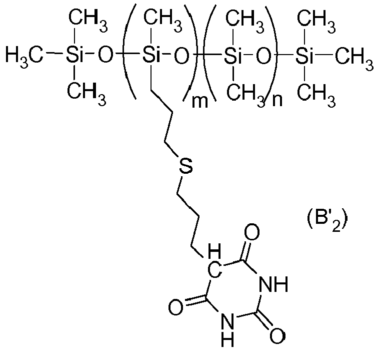

In some still preferred embodiments, R₂ is H, W is -*NH(C=O)-, S₁ is -(CH₂)₃- and S₂ is -CH₂- while R₁ is as previously defined.

In some more preferred embodiments, R₂ is H, W is -*NH(C=O)-, S₁ is -(CH₂)₃- and S₂ is -CH₂- while R₁ is -CH₃. Thus, examples of polysiloxanes (P1) according to the invention are represented by formulae (A₃), (A'₃) (with R' =-CH₂-CH₃), (B₃) and (B'₃) (with R' = -CH₂-CH₃) below :

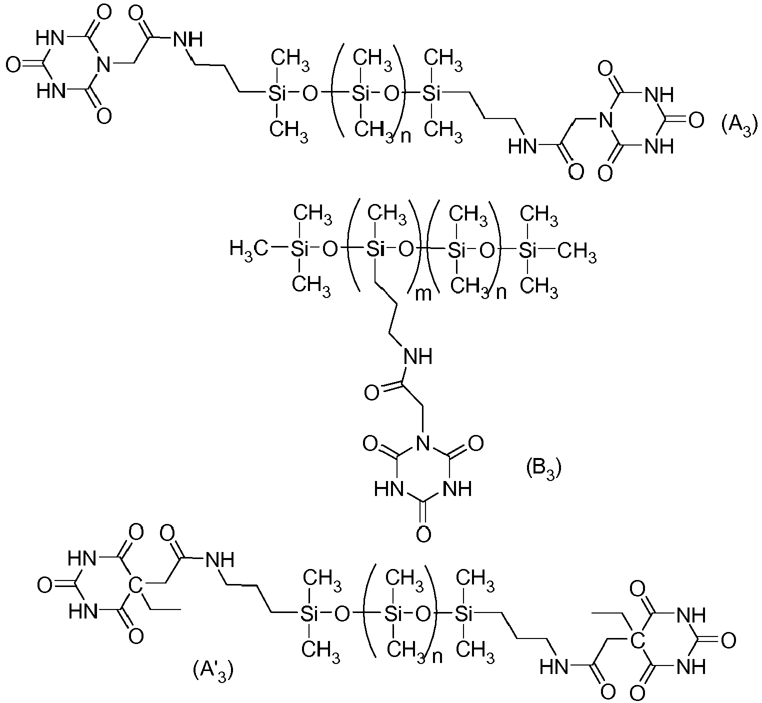

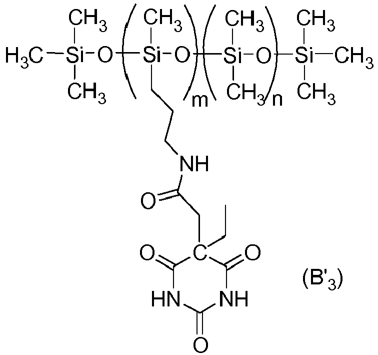

In some preferred embodiments R₂ is H, W is -CH₂-CH₂-, S₁ is nil and S₂ is-C₆H₄- while R₁ is -CH₃. Example of polysiloxanes (P1) according to the invention is represented by formula (A"₁) (with R'=H) :

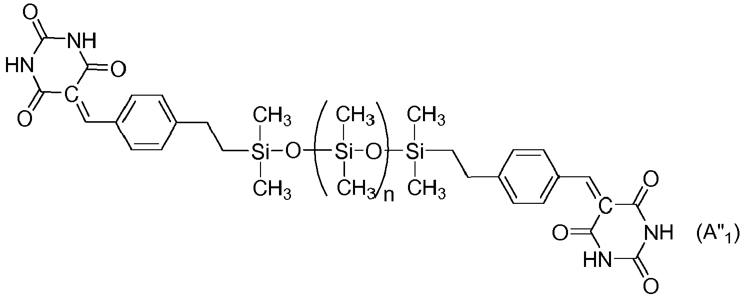

In some other preferred embodiments R₂ is H, W is -*S-CH₂-CH₂-, S₁ is -(CH₂)₃- and S₂ is -C₆H₄- while R₁ is -CH₃. Example of polysiloxanes (PI) according to the invention is represented by formula (A"₂) (with R'=H) :

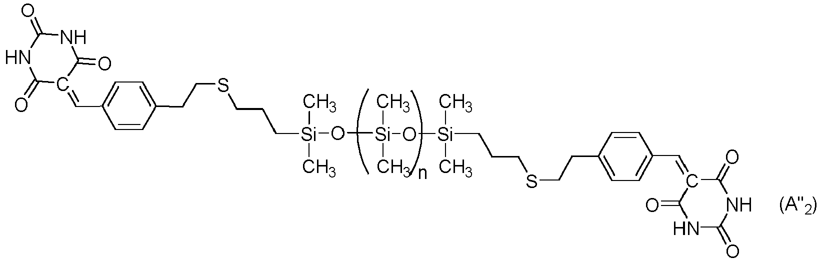

In some still preferred embodiments R₂ is H, W is -*NH(C=O)-, S₁ is -(CH₂)₃- and S₂ is -C₆H₄- while R₁ is -CH₃. Example of polysiloxanes (PI) according to the invention is represented by formula (A"₃) (with R'=H) :

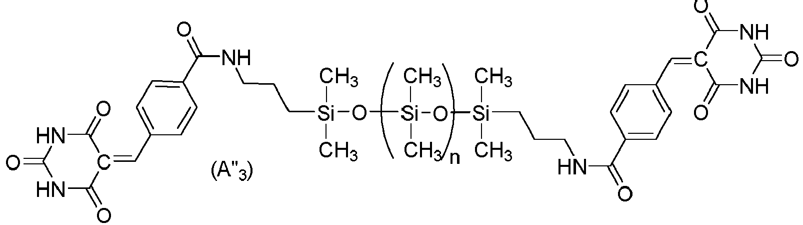

Preferably, the polysiloxane (P1) according to the invention is a telechelic PDMS corresponding to formula (A₁), (A'₁), (A"₁), (A₂), (A'₂), (A"₂), (A₃), (A'₃) or (A"₃). More preferably, the polysiloxane (P1) according to the invention is a telechelic PDMS corresponding to formula (A₁), (A₂) or (A₃). Even more preferably, the polysiloxane (P1) according to the invention is a telechelic PDMS corresponding to formula (A₃).

For the polysiloxane (P1), n represents an average number of repeating units that can be determined by NMR spectroscopy by a method well known by the skilled person and that will be described in the experimental part.

Generally, n is an integer at least equal to 5, preferably at least equal to 7, more preferably at least equal to 10 and even more preferably at least equal to 12. Besides, n is an integer at most equal to 4000, preferably at most equal to 2000, more preferably at most equal to 1000 and even more preferably at most equal to 200.

Generally, n is ranging from 5 to 4000. Preferably n is ranging from 7 to 2000, more preferably from 10 to 1000 and even more preferably from 12 to 200.

For the polysiloxane (P1) responding to formula (B) m represents an average number of repeating units that can be determined by NMR spectroscopy. Generally, m is an integer such as the ratio n/m is ranging from 500 to 2, preferably from 100 to 4 and more preferably from 50 to 6.

It is another object of the invention to disclose a process for preparing a polysiloxane (PI) corresponding to formula (A) as previously defined 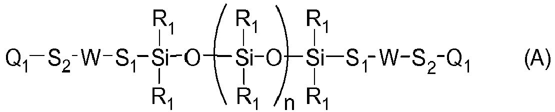 comprising the steps of :
- preparing a mixture comprising a polysiloxane of formula (P) and a molecule of formula (R), 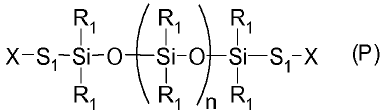 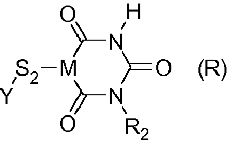
   wherein X is a reactive groups bonded to the polysiloxane backbone via a spacer S₁ and,
   wherein Y is a reactive group bonded to the isocyanuric or to the barbituric acid moiety corresponding to formula (C) via a spacer S₂ and capable of reacting with X to give a bridge W between S₁ and S₂ and,
- reacting group X with group Y so as to obtain the polysiloxane corresponding to formula (A).

It is also an object of the invention to disclose a process for preparing a polysiloxane (P1) corresponding to formula (B) as previously defined 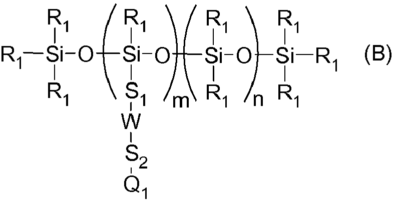 comprising the steps of :
- preparing a mixture comprising a polysiloxane of formula (Q) and a molecule of formula (R), 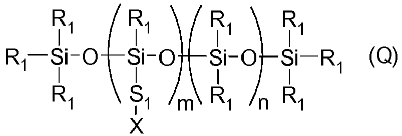 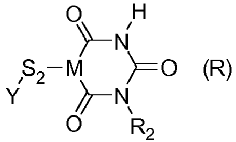
   wherein X is a reactive groups bonded to the polysiloxane backbone via a spacer S₁ and,
   wherein Y is a reactive group bonded to the isocyanuric or to the barbituric acid moiety corresponding to formula (C) via a spacer S₂ and capable of reacting with X to give a bridge W between S₁ and S₂ and,
- reacting group X with group Y so as to obtain the polysiloxane corresponding to formula (B).

Just in the sake of example, X can be selected from the list consisting of -COOH, -COOR, -N=C=O, -NH₂, -NHR, -H, -CH=CH₂, -SH and -OH wherein R is a C₁-Cg alkyl group.

X is preferably selected from the list consisting of -H, -CH=CH₂, -COOH, -NH₂ and -SH, more preferably from the list consisting of -H, -NH₂, and -SH. Good results were obtained with X being -NH₂.

Just in the sake of example, Y can be selected from the list consisting of -COOH, -COOR, -N=C=O, -NH₂, -NHR, -H, -CH=CH₂, -SH and -OH wherein R is a C₁-Cg alkyl group. Y is preferably selected from the list consisting of -H, -CH=CH₂, -COOH, -NH₂ and -SH, more preferably from the list consisting of -COOH, and -CH=CH₂. Good results were obtained with Y being -COOH.

In some preferred embodiments, S₁ is nil, X is -H, Y is -CH=CH₂ and W is - CH₂-CH₂-. In some more preferred embodiments, S₁ is nil, X is -H, Y is - CH=CH₂, W is -CH₂-CH₂- and S₂ is -CH₂-. Accordingly the reaction between X and Y can be represented by one of the reaction schemes below :

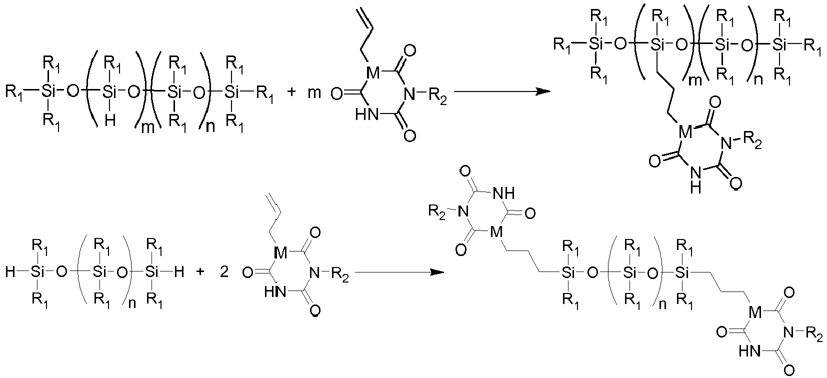

The reaction is an addition reaction, namely hydrosilylation, of Si-H onto carbon-carbon double bond. Generally, the reaction is catalyzed by a transition metal based catalyst. Just for the matter of example, the transition metal can be selected from the list consisting of Rh, Ru and Pt. Preferably, Pt catalysts such as chloroplatinic acid hydrate (H₂PtCl₆, xH₂O) or platinum(0)-1,3-divinyl-1,1,3,3-tetramethyldisiloxane complex are used.

In some other preferred embodiments, X is -SH, Y is -CH=CH₂ and W is -*S-CH₂-CH₂-. In some more preferred embodiments, X is -SH, Y is -CH=CH₂, W is -*S-CH₂-CH₂- and S₁ is -(CH₂)₃- and S₂ is -CH₂-. Accordingly the reaction between X and Y can be represented by one of the reaction schemes below :

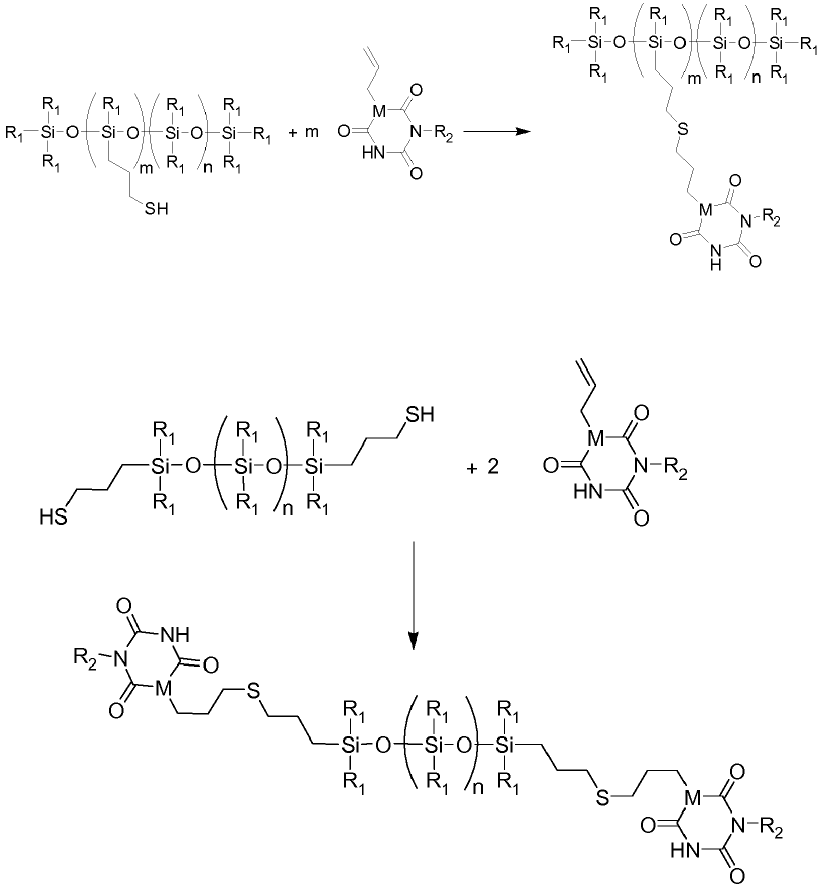

The reaction is an addition reaction, namely hydrothiolation, of -SH onto carbon-carbon double bond. Generally, the reaction is triggered by the decomposition of a free radical initiator. Just for the matter of example, radical initiator can be an azo compound i.e. containing a double bond -N=N- such as azobisisobutyronitrile (AIBN) or an organic peroxide i.e. containing a peroxide bond -O-O- such as benzoylperoxide (BPO).

In some more preferred embodiments, X is -NH₂, Y is -COOH and W is-*NH(C=O)-. In some even more preferred embodiments, X is -NH₂, Y is-COOH, W is -*NH(C=O)- and S₁ is -(CH₂)₃- and S₂ is -CH₂-. Accordingly the reaction between X and Y can be represented by one of the reaction schemes below:

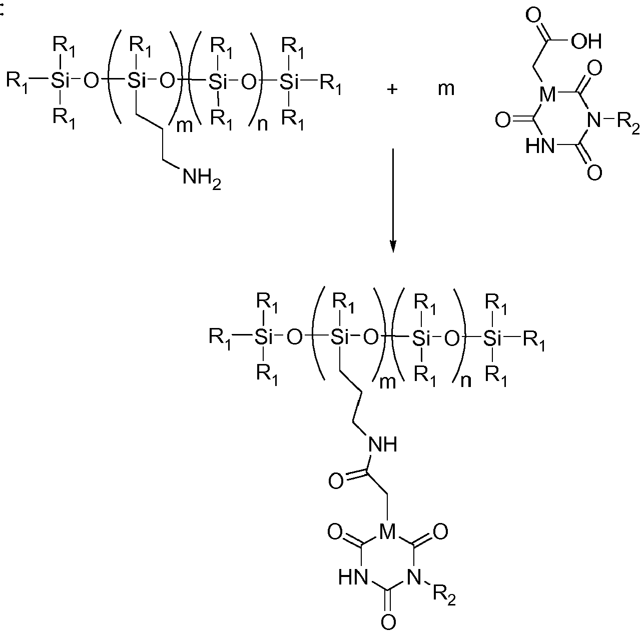

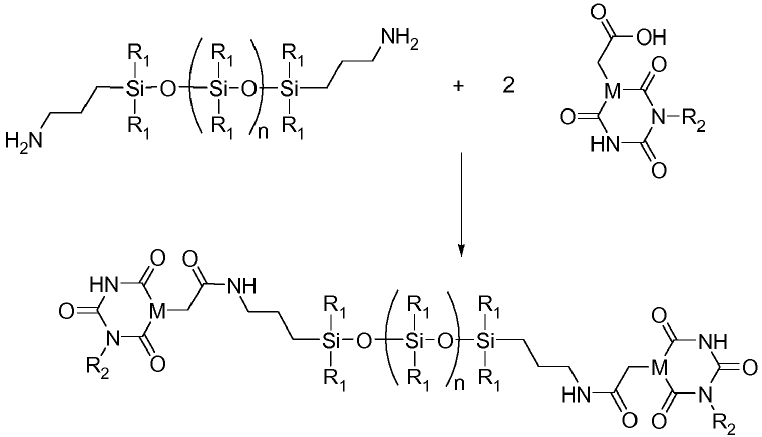

The reaction is a coupling reaction between an amine and a carboxylic acid to give an amide linkage.

In view to quantitatively modify the amine groups carried by the siloxane backbone the molar ratio between the carboxylic acid moieties and the amine moieties in the reaction medium is equal or exceeding 1. Generally, the molar ratio between the carboxylic acid moieties and the amine moieties is of at least 1.0, preferably of at least 1.1, more preferably of at least 1.2 and even more preferably of at least 1.3. Besides, the molar ratio between the carboxylic acid moieties and the amine moieties is generally of at most 1.7, preferably of at most 1.6, more preferably of at most 1.5 and even more preferably of at most 1.4. Generally, the molar ratio between the carboxylic acid moieties and the amine moieties is ranging from 1.0 to 1.7, preferably from 1.1 to 1.6, more preferably from 1.2 to 1.5 and even more preferably from 1.3 to 1.4.

Generally, the reaction is conducted in the presence of an activating agent of the coupling reaction. Just as matter of example one can select the activating agent from the list consisting of dicyclohexylcarbodiimide (DCC), diisopropylcarbodiimide (DIC) and 1,1'-carbonyldiimidazole (CDI). Good results were obtained with CDI.

The activating agent is generally used in a molar ratio close to a stoichiometric ratio with the carboxylic acid moiety. The molar ratio between the activating agent and the carboxylic acid is generally of at least 0.90, preferably at least 0.95 and more preferably of at least 0.99. Besides, the molar ratio between the activating agent and the carboxylic acid is generally of at most 1.1, preferably at most 1.05 and more preferably of at most 1.01. The molar ratio between the activating agent and the carboxylic acid is generally ranging from 0.9 to 1.1. Just for the sake of example the process according to the invention allows preparing advantageous polysiloxanes (A₁), (A₂), (A₃), (B₁), (B₂), (B₃), (A'₁), (A'₂), (A'₃), (B'₁), (B'₂), (B'₃), (A"₁), (A"₂) and (A"₃).

(A₁) can be obtained by hydrosilylation reaction involving Si-H groups, carbon-carbon double bond and for example platinum based catalyst:

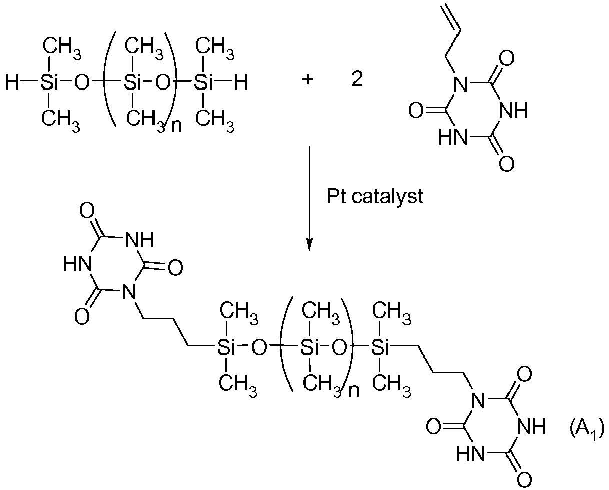

The reaction can be conducted using an hydride terminated polydimethylsiloxane such as DMS-H21 provided by Gelest and the vinyl compound described by G.Arrachart et al. in Chemistry a European Journal, 2009, 15, 6279.
(A'1) can be obtained reacting the hydride terminated polydimethylsiloxane as DMS-H21 provided by Gelest with the vinyl compound described by H.Fenniri et al. in Journal of American Chemical Society, 2001, 123 (16), 3854. 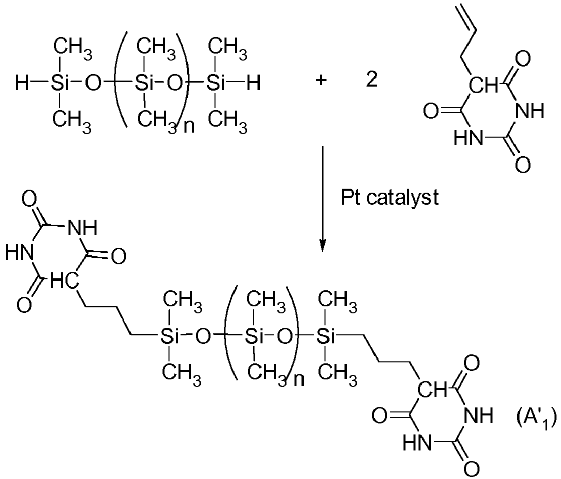
(A"1) can be obtained reacting the hydride terminated polydimethylsiloxane as DMS-H21 provided by Gelest with a vinyl compound that can be obtained via the reaction between barbituric acid and 4-vinylbenzaldehyde under the reaction conditions described by M. Amin Hasan et al. in Spectrochimica Acta Part A, 2011, 83, 532-539 for the reaction between barbituric acid and 4-formylbenzoic acid: 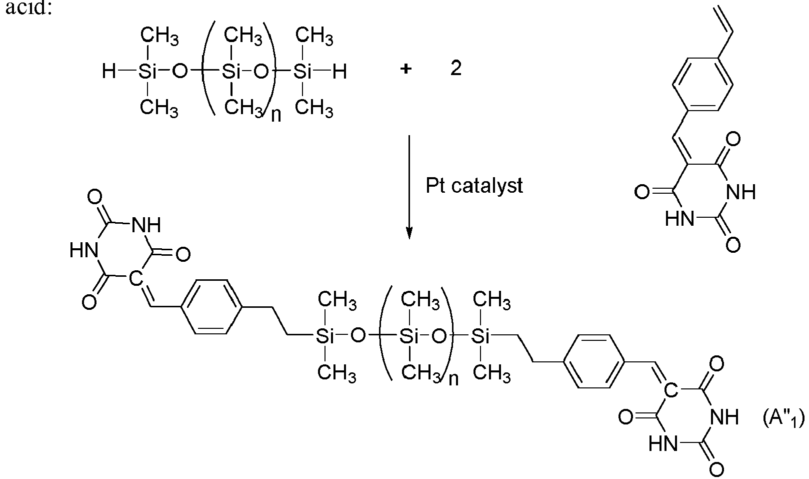
(A₂) can be obtained by thiol-ene addition involving a free radical initiator:

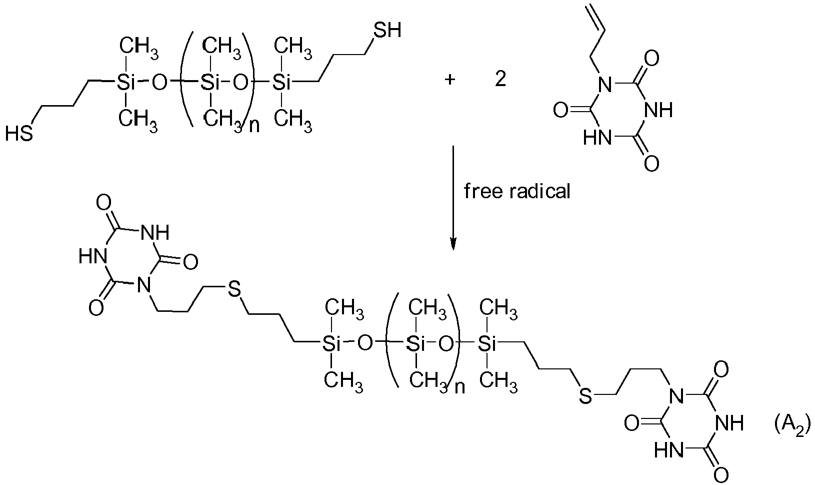

The reaction can be conducted using a mercaptopropyl terminated polydimethylsiloxane such as DMS-SM21 provided by Gelest and the vinyl compound described by G.Arrachart et al. in Chemistry a European Journal, 2009, 15, 6279.
(A'2) can be obtained reacting the mercaptopropyl terminated polydimethylsiloxane DMS-SM21 provided by Gelest with the vinyl compound described by H.Fenniri et al. in Journal of American Chemical Society, 2001, 123 (16), 3854. 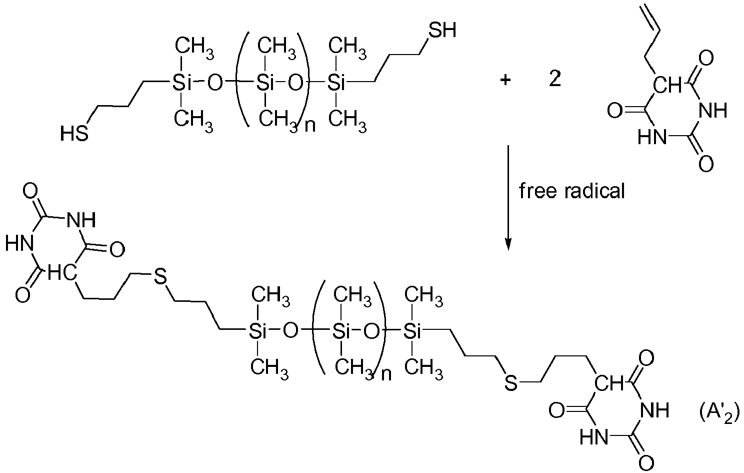
(A"2) can be obtained reacting the mercaptopropyl terminated polydimethylsiloxane DMS-SM21 provided by Gelest with a vinyl compound that can be obtained via the reaction between barbituric acid and 4-vinylbenzaldehyde under the reaction conditions described by M. Amin Hasan et al. in Spectrochimica Acta Part A, 2011, 83, 532-539 for the reaction between barbituric acid and 4-formlbenzoic acid: 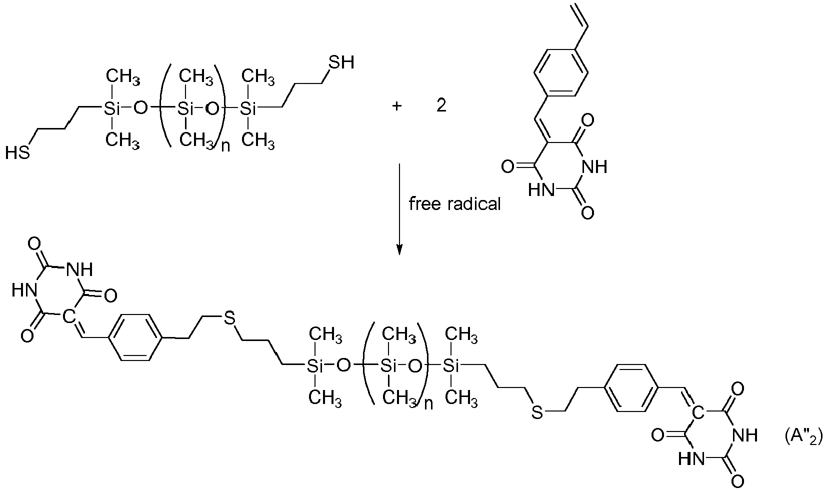
(A₃) can be obtained by condensation reaction of amine with carboxylic acid involving for example carbonyldiimidazole (CDI) as activating agent: 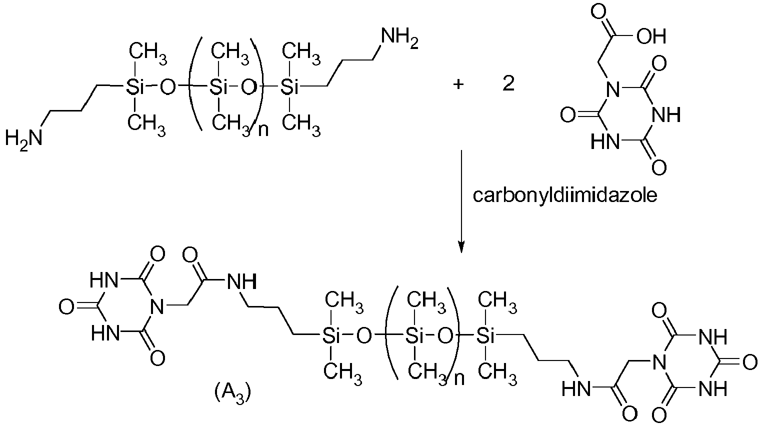
(A₃) can be obtained reacting the aminopropyl terminated polydimethylsiloxane DMS-A12 provided by Gelest with the isocyanuricacid derivatives the syntheses of which is described in the experimental part.
(A'3) can be obtained by condensation reaction of the amine groups of the aminopropyl terminated polydimethylsiloxane DMS-A12 provided by Gelest with the carboxylic acid group of the compound described by O.Félix et al. in European Journal of Organic Chemistry, 2003, 1463-1474. 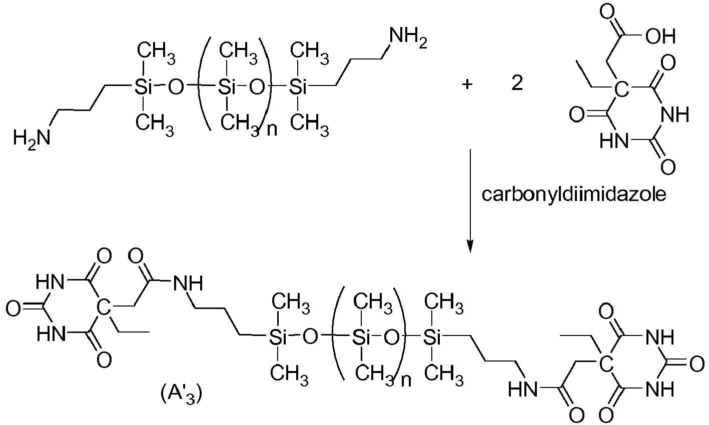
(A"3) can be obtained by condensation reaction of the amine groups of the aminopropyl terminated polydimethylsiloxane DMS-A12 provided by Gelest with the carboxylic acid group of the compound described by M. Amin Hasan et al. in Spectrochimica Acta Part A, 2011, 83, 532-539 obtained by reaction between barbituric acid and 4-formylbenzoic acid under Knoevenagel reaction conditions: 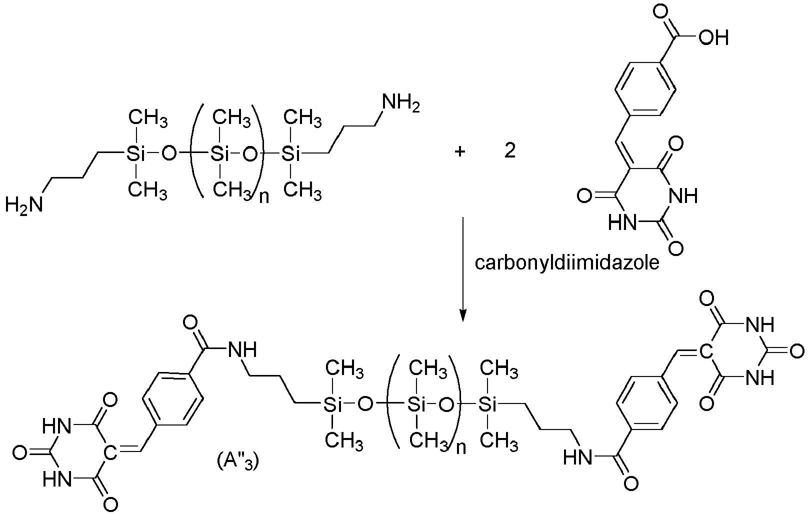
(B₁) can be obtained by hydrosilylation reaction involving Si-H groups, carbon-carbon double bond and for example platinum based catalyst:

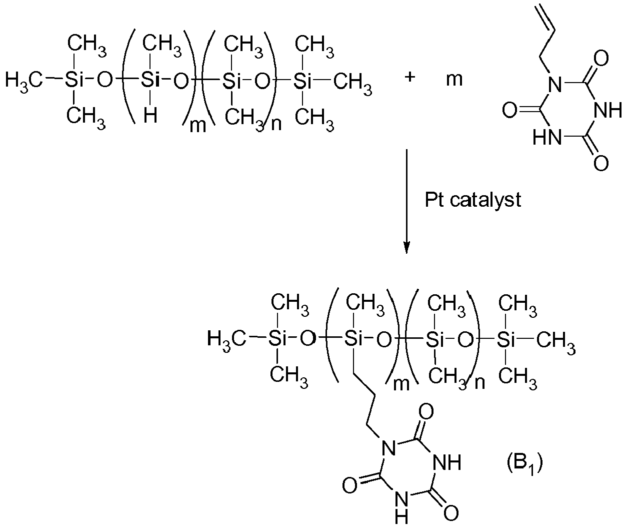

The reaction can be conducted using a trimethylsiloxane terminated methylhydrosiloxane-dimethylsiloxane copolymer such as HMS-071 provided by Gelest.
(B'₁) can be obtained by hydrosilylation reaction involving the trimethylsiloxane terminated methylhydrosiloxane-dimethylsiloxane copolymer HMS-071 provided by Gelest, the vinyl compound described by H.Fenniri et al. and for example platinum based catalyst: 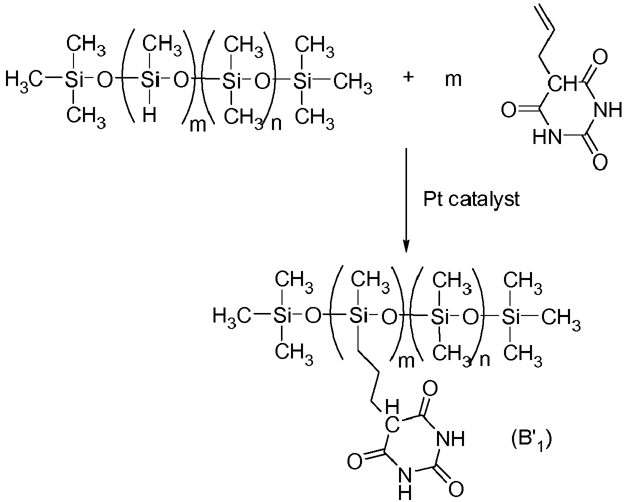
(B₂) can be obtained by thiol-ene addition involving a free radical initiator:

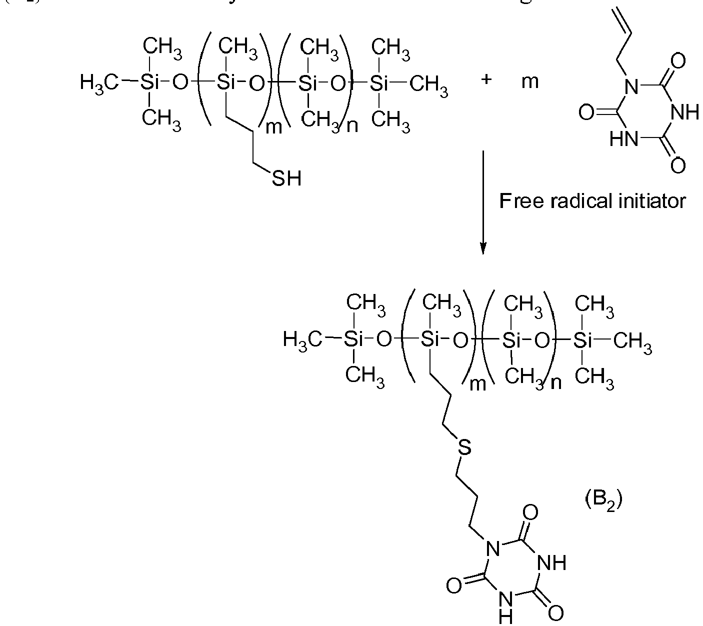

The reaction can be conducted using a trimethylsiloxane terminated mercaptopropylmethylsiloxane-dimethylsiloxane copolymer such as SMS-142 provided by Gelest.
(B'₂) can be obtained by thiol-ene addition involving a free radical initiator, the trimethylsiloxane terminated mercaptopropylmethylsiloxane-dimethylsiloxane copolymer SMS-142 provided by Gelest and the vinyl compound described by H.Fenniri et al.: 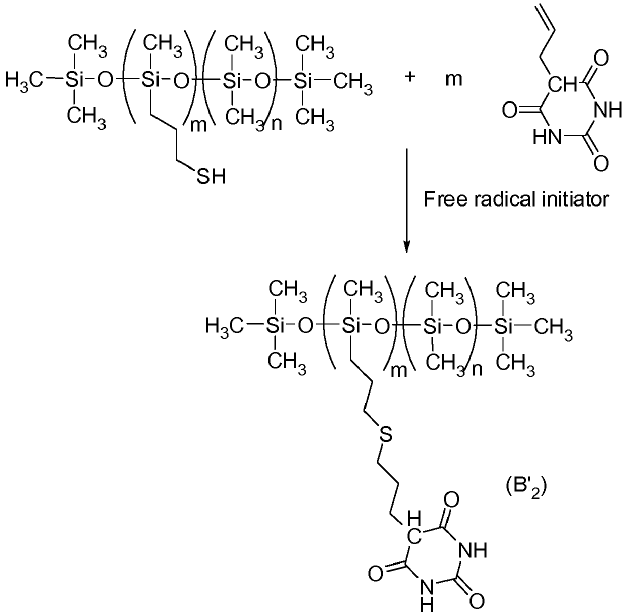
(B₃) can be obtained by condensation reaction of amine with carboxylic acid involving for example carbonyldiimidazole (CDI):

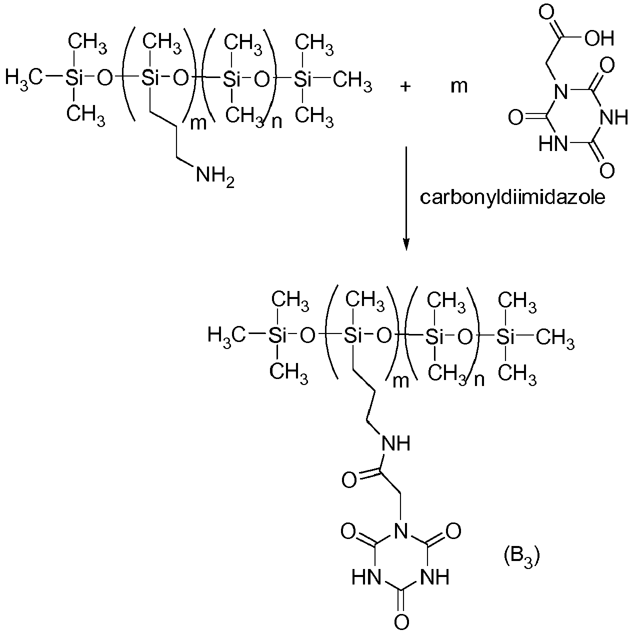

The reaction can be conducted using a trimethylsiloxane terminated aminopropylmethylsiloxane-dimethylsiloxane copolymer such as AMS-191 provided by Gelest.
(B'₃) can be obtained by condensation reaction of amine with carboxylic acid using the trimethylsiloxane terminated aminopropylmethylsiloxane-dimethylsiloxane copolymer AMS-191 provided by Gelest, the compound described by O.Félix et al. and carbonyldiimidazole (CDI):

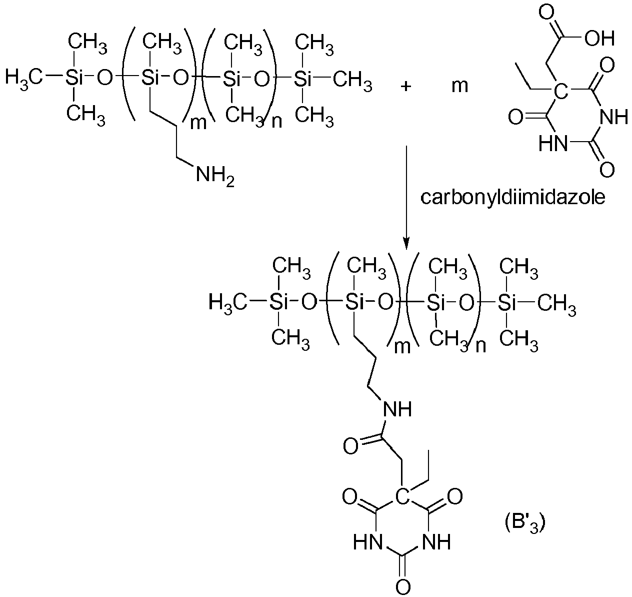

Preferably, the polysiloxane according to the invention is a telechelic PDMS corresponding to formula (A₁), (A'₁), (A"₁), (A₂), (A'₂), (A"₂), (A₃), (A'₃) or (A"₃). More preferably, the polysiloxane according to the invention is a telechelic PDMS corresponding to formula (A₃).

The polysiloxanes bearing an isocyanuric or a barbituric acid moiety according to the invention give generally poor self-association via hydrogen bondings between the polysiloxane chains. Accordingly, they are generally liquids at room temperature and generally exhibit no thermoplastic behavior.

However, the polysiloxanes according to the invention are advantageously capable of giving supramolecular association when mixed with other polymers bearing complementary H-bond donor and H-bond acceptor groups. The mixtures of the polysiloxanes according to the invention with said polymers are generally solid at room temperature and exhibits thermoplastic behavior that can be characterized by rheological measurements as will be shown hereinafter. Finally, the polysiloxanes according to the invention have advantageously a high thermal stability that can be assessed by thermogravimetric analysis (TGA).

It is another object of the present invention to disclose a thermoplastic composition comprising:
- at least one polysiloxane (P1) chosen from polysiloxanes corresponding to formula (A) and polysiloxanes corresponding to formula (B), with formulae (A) and (B) as previously defined, and
- at least one polysiloxane (P2) chosen from polysiloxanes bearing on both ends a nitrogen-containing heterocyclic group bearing at least a function chosen in the group consisting of primary amine and secondary amine or, bearing at least 2 of said nitrogen-containing heterocyclic groups as side chain pendant groups.

The nitrogen-containing heterocyclic group, bearing at least a function chosen in the group consisting of primary amine and secondary amine, may be attached to the polysiloxane polymer directly with a single bond or via a linker, such as for instance a linear or branched C₁-C₆ alkylene group, ether function, ester function, carboxylic function, amine function, amide function, an urea or carbamate functional group.

The nitrogen-containing heterocyclic group, bearing at least a function chosen in the group consisting of primary amine and secondary amine, may be preferably chosen in the group consisting of (it being understood that all the tautomeric forms are included):
- A substituted or unsubstituted triazine-based group, such as diaminotriazine and melamine;
- A substituted or unsubstituted pyridine-based group, such as diaminopyridine ;
- A substituted or unsubstituted pyrimidine-based group, such as cytosine, and thymine;
- A substituted or unsubstituted pyrazine-based group, such as aminopyrazine;
- A substituted or unsubstituted trimethylene urea-based group, such as monourea or bisurea;
- A substituted or unsubstituted imidazolidine-based group, such as imidazolidone, imidazolidine 2,4-dione (hydantoin);
- A substituted or unsubstituted triazole-based group, such as amino-triazole;
- A substituted or unsubstituted isocytosine-based group, such as alkylisocytosine, and substituted ureido pyrimidinone.

The nitrogen-containing heterocyclic group is preferably a heteroaryl group, such as pyridine, diazine, triazine, tetrazine, imidazole, and pirazole.

The nitrogen-containing heterocyclic group, bearing at least a function chosen in the group consisting of primary amine and secondary amine, may have the general structure of formula (E) as follows: 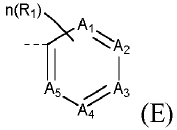 wherein, the ring is a 6-membered aromatic ring wherein A₁, A₂, A₃, A₄ and A₅ are each independently carbon or nitrogen, with the proviso that at least 3 of A₁, A₂, A₃, A₄ and A₅ are carbon atoms, n is from 1 to 4, notably from 1 to 3, notably 1, 2 or 3, each R₁ is independently alkyl, alkenyl, carboxyl, carboxyl ester, amino, hydroxyl, halo, haloalkyl, or heteroaryl, with the proviso that said nitrogen-containing heterocyclic group bears at least a primary amine and/or a secondary amine.

Polysiloxane polymer may notably be connected to nitrogen-containing heterocyclic group by a carbon atom of said heterocyclic group, by an oxygen atom of said heterocyclic group or by a nitrogen atom of said heterocyclic group, via a linker or a single bond as previously expressed.

The nitrogen-containing heterocyclic group may bear at least one primary amine function wherein "primary amine" denotes a -NH₂ group.

The nitrogen-containing heterocyclic group may bear at least one secondary amine function wherein "secondary amine" denotes a -NHR group, wherein R is selected from the group consisting of C₁-C₆ alkyl, C₆-C₁₂ aryl, C₇-C₁₂ alkaryl and C₇-C₁₂ alkylaryl groups, wherein the alkyl groups may be linear, branched or cyclic.

Preferably the nitrogen-containing heterocyclic group is substituted or unsubstituted triazine-based heterocyclic group. More preferably, nitrogen-containing heterocyclic group of the invention is derived from a 4,6-diaminotriazine (DAT).

The substituted or unsubstituted nitrogen-containing heterocyclic group of the invention may be H-bonding and may comprise at least two sites capable of H-donor capability and at least one site capable of H-acceptor capability (where these two sites are not be fully reacted). The H-donor site may be a H-donor group well known by those skilled in the art. Such an H-donor group may comprise -NH₂, -NH-, -OH or -SH groups. The H-acceptor site may be a H-acceptor site well known by those skilled in the art. Such an H-acceptor site may comprise atoms like O, N or S.

In particular, it is another object of the present invention to disclose a thermoplastic composition comprising:
- at least one polysiloxane (P1) chosen from polysiloxanes corresponding to formula (A) and polysiloxanes corresponding to formula (B), with formulae (A) and (B) as previously defined, and
- at least one polysiloxane (P2) chosen from polysiloxanes corresponding to formula (D) and polysiloxanes corresponding to formula (E), with formulae (D) and (E) as represented hereinafter : 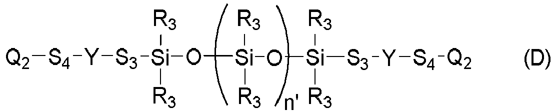 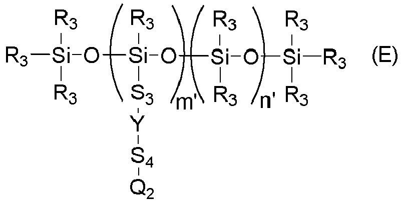
   wherein each R₃ is independently selected from C₁-C₂₀ hydrocarbyl groups optionally substituted by a perfluoroalkyl group and,
   wherein S₃ and S₄ which may be the same or different are nil or a C₁-C₄₀ hydrocarbylene groups optionally interrupted by one or more heteroatoms or heteroatom-containing groups chosen from the list consisting of -O-, -S-,-(C=O)-, -(C=S)-, -CO-NH-, -NH-CO-O- and -NH-CO-NH-, and
   wherein Y is a divalent group selected from the list consisting of -NH-, -NR-,-CH₂-CH₂-, -*S-CH₂-CH₂-, -*CH₂-CH₂-S-, -*NH(C=O)-, -(*C=O)NH-,-*NR(C=O)-, -(*C=O)NR-, -(*C=O)O-, -*O(C=O)-, -*NH-CO-O-, -NH-CO-O*- and -NH-CO-NH- wherein the atom designed with * is linked to S₃ and wherein R is a C₁-C₈ alkyl group and,
   wherein Q₂ is a diaminotriazine moiety corresponding to formula (F): 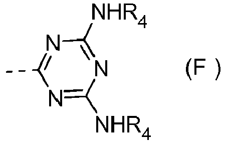
   wherein R₄ is independently H or a C₁-C₂₀ hydrocarbyl group optionally comprising a carbonyl group and,
   wherein n' is an integer ranging from 5 to 4000 and,
   wherein m' is an integer such as the ratio n'/m' is ranging from 500 to 2.

For the polysiloxane (P2), n' represents an average number of repeating units that can be determined by NMR spectroscopy by a method well known by the skilled person and that will be described in the experimental part.

Generally, n' is an integer at least equal to 5, preferably at least equal to 7, more preferably at least equal to 10 and even more preferably at least equal to 12. Besides, n' is an integer at most equal to 4000, preferably at most equal to 2000, more preferably at most equal to 1000 and even more preferably at most equal to 200.

Generally, n' is ranging from 5 to 4000. Preferably n' is ranging from 7 to 2000, more preferably from 10 to 1000 and even more preferably from 12 to 200.

For the polysiloxane (P2) responding to formula (E) m' represents an average number of repeating units that can be determined by NMR spectroscopy. Generally, m' is an integer such as the ratio n'/m' is ranging from 500 to 2, preferably from 100 to 4 and more preferably from 50 to 6.

Each R₃ is independently selected from C₁-C₂₀ hydrocarbyl groups. In some embodiments, each R₃ is independently selected from C₁-C₂₀ hydrocarbyl groups optionally substituted by a perfluoroalkyl group. Hydrocarbyl group and perfluoroalkyl groups are as previously described. Hydrocarbyl group R₃ is advantageously an alkyl or an aryl group. Good results were obtained with R₃ being phenyl group. In a preferred embodiment R₃ is an alkyl group and more preferably a methyl group.

Just as matter of example the polysiloxanes represented in figures **(XIX)** to **(XXXVI)** below can be suitable for the thermoplastic composition according to the present invention. 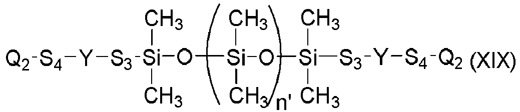 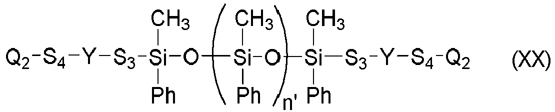 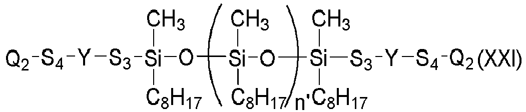 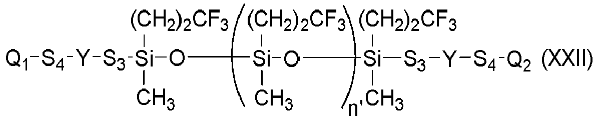 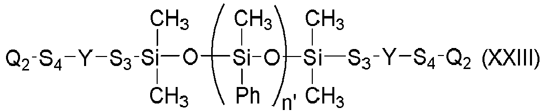 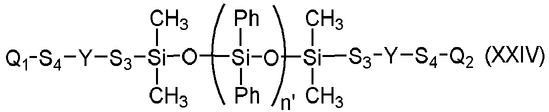 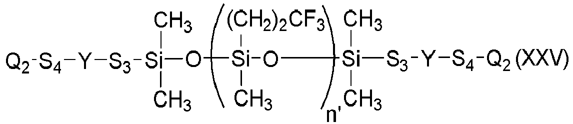 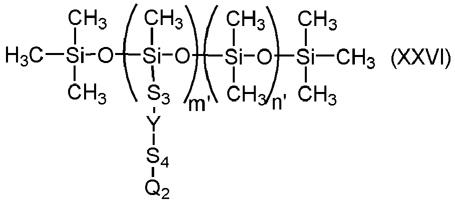 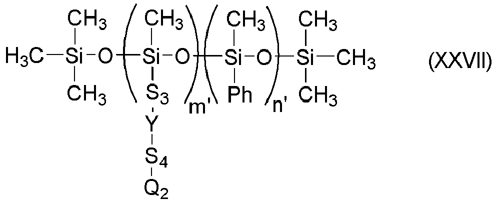 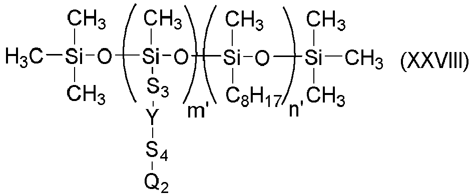 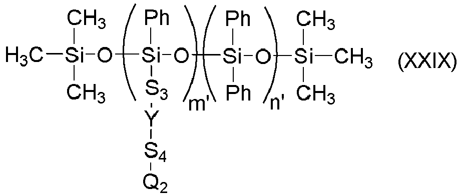 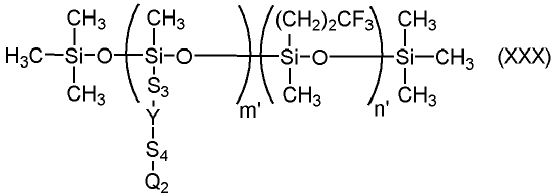 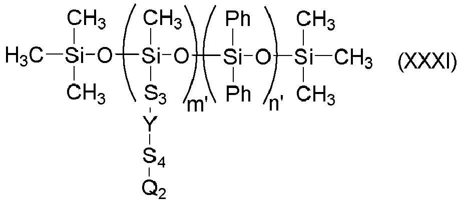 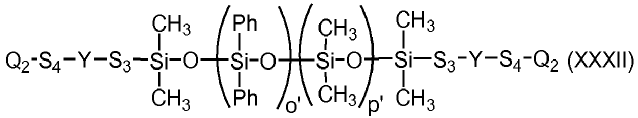 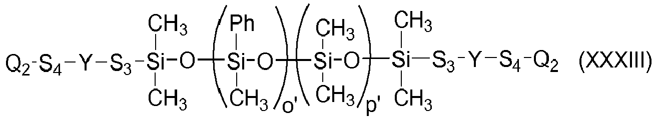 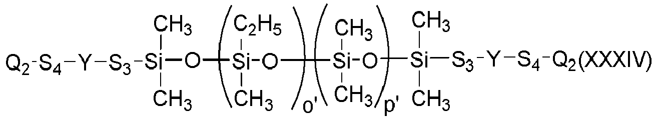 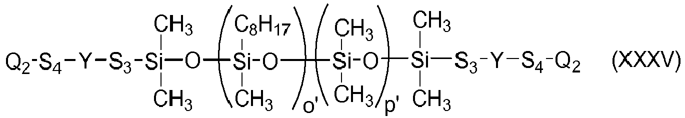 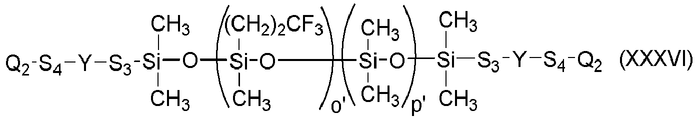 wherein for polysiloxanes according to figures (XXXII) to (XXXVI) o' and p' are integers such that o' + p' = n', with n' as defined above.

S₃ is generally nil or a C₁-C₄₀ hydrocarbylene group optionally interrupted by one or more heteroatoms or heteroatom-containing groups chosen from the list consisting of -O-, -S-, -(C=O)-, -(C=S)-, -CO-NH-, -NH-CO-O- and -NH-CO-NH-.

S₃ is preferably nil or a C₁-C₄₀ hydrocarbylene group, more preferably S₃ is nil or -(CH₂)_{q}- with q ranging from 1 to 12, even more preferably S₃ is nil or -(CH₂)₃- and most preferably S₃ is -(CH₂)₃-.

S₄ is generally nil or a C₁-C₄₀ hydrocarbylene group optionally interrupted by one or more heteroatoms or heteroatom-containing groups chosen from the list consisting of -O-, -S-, -(C=O)-, -(C=S)-, -CO-NH-, -NH-CO-O- and -NH-CO-NH-.

S₄ is preferably nil or -(CH₂)_{q}- with q ranging from 1 to 12, more preferably S₄ is nil or -(CH₂)₃- and even more preferably S₄ is nil.

Y is a divalent group generally selected from the list consisting of -NH-, -NR-,-CH₂-CH₂-, -*S-CH₂-CH₂-, -*CH₂-CH₂-S-, -*NH(C=O)-, -(*C=O)NH-,-*NR(C=O)-, -(*C=O)NR-, -(*C=O)O-, -*O(C=O)-, -*NH-CO-O-, -NH-CO-O*- and -NH-CO-NH-. Y is preferably selected from -NH-, -NR-, -CH₂-CH₂-, -*S-CH₂-CH₂-, -*CH₂-CH₂-S-, -*NH(C=O)-, -(*C=O)NH-, -*NR(C=O)- and - (*C=O)NR-, more preferably selected from -NH-, -NR-, -CH₂-CH₂-, -*S-CH₂-CH₂- and *NH(C=O)-. Good results were obtained with Y being -NH-.

R₄ is generally H or a C₁-C₂₀ hydrocarbyl group. In some embodiments R₄ is a C₁-C₂₀ hydrocarbyl group optionally comprising a carbonyl group. When R₄ is an hydrocarbyl group comprising a carbonyl group it is preferably an acetyl group -CO-CH₃. Good results were obtained with R₄ equal to H.

The molar ratio between the at least one polysiloxane (P1) and the at least one polysiloxane (P2) is generally adjusted in the composition according to the invention in such a way that the molar ratio between the cyanuric or barbituric acid moieties and the nitrogen-containing heterocyclic moieties (in particular diaminotriazine moieties) ranges from 0.25 to 4.0. The molar ratio preferably ranges from 0.5 to 2.0, more preferably from 0.75 to 1.5, even more preferably from 0.9 to 1.1. In some preferred embodiments the molar ratio between the cyanuric or barbituric acid moieties and the nitrogen-containing heterocyclic moieties (in particular diaminotriazine moieties) is substantially equal to 1.

In some embodiments the composition according to the invention comprises, as sole polymers, at least one polysiloxane (P1) and at least one polysiloxane (P2). In some other embodiments the composition according to the invention consists of at least one polysiloxane (P1) and at least one polysiloxane (P2).

In some preferred embodiments the composition according to the invention consists of a polysiloxane (P1) corresponding to formula (A) and of a polysiloxane (P2) corresponding to formula (D).

In some more preferred embodiments the composition consists of telechelic polysiloxane (P1) corresponding to formula (A₃) and of telechelic polysiloxane (P2) corresponding to formula (D₃) as represented hereinafter :

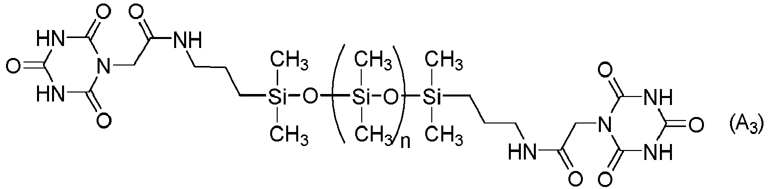

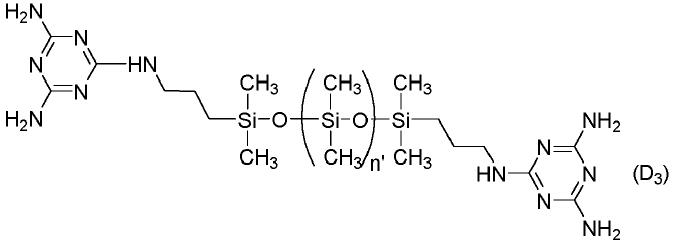

The thermoplastic composition according to the invention is generally substantially free of any liquid i.e. generally comprises an amount of liquid not exceeding 0.5 wt. % based on the total weight of the composition, or is even totally free of any liquid.

The thermoplastic composition according to the invention may comprise at least one other ingredient; for example, it may comprise a stabilizer, a filler, a plasticizer or a processing aid. Good results can be obtained with a thermoplastic composition composed essentially of, i.e. comprising an amount of other ingredient not exceeding 0.5 wt. % based on the total weight of the composition , or even composed of the polysiloxane (P1) and of the polysiloxane (P2).

The compositions according to the invention may be assessed with regard to their rheological properties as will be described in experimental part.

Without being bond by any theory, the polysiloxane (P1) bearing cyanuric acid is capable of giving supramolecular association via H-bond interactions when mixed with polysiloxane (P2) bearing complementary diaminotriazine moieties. The composition comprising such polysiloxanes generally results in a thermally reversible supramolecular network and in a material exhibiting thermoplastic behavior in a temperature range generally reaching temperature well above room temperature. Accordingly, the composition generally gives a solid material at room temperature that can be soften by heating and even liquefied when the temperature reached is enough to break all the intermolecular H-bonds responsible for supramolecular association. The different physical states of the compositions can be characterized by rheological measurements. More particularly, the dissociation temperature of the supramolecular network can generally be associated to the temperature of the cross-over point (T_{C-O}) between the curve representing the storage modulus G' vs temperature and the curve representing the loss modulus G" vs temperature.

The crosslink density of the supramolecular network is generally related to the ratio of the number of cyanuric acid containing repetitive units with the number of siloxane repetitive units or to the ratio of cyanuric acid containing end groups with the number of siloxane repetitive units. Depending on the crosslink density of the supramolecular network, the material may have different mechanical and rheological properties. For example, the material may be a soft elastomeric network when crosslink density is low or a hard and brittle network when crosslink density is high.

The cross-over point may be determined by rheological measurement, using a RDA III instrument with TA orchestrator software, equipped with a parallel plates geometry (diameter 8 mm or 25 mm). The linear domain can be firstly determined, and a temperature sweep at 10 rad/s between Tmin and Tmax at 2°C/min can be acquired. Cross-Over point can be measured on the Tsweep curve at the temperature where moduli G' and G" cross. The cross-over point temperature of the composition according to the invention is generally ranging from 10°C to 250°C, preferably from 40°C to 220°C.

Broadeness of rubbery plateau (°C) is measured on the temperature sweep curve and covers the range of temperatures comprised between the glass transition temperature (Tg) and the temperature of dissociation T_{C-O} (cross-over point). In the composition according to the invention, the broadness of rubbery plateau may be very large up to 305°C. It is generally of at least 150°C, preferably of at least 200°C and more preferably of at least 250°C.

In some embodiments, the storage modulus G' of the composition according to the invention increases with temperature increasing from 30 °C to 150 °C.. Accordingly, the ratio G'_{@150°C}/ G'_{@30°C} may be comprised between 1 and 1.8, preferably between 1 and 1.6 with G'_{@150°C} and G'_{@30°C} being the G'value measured respectively at 150°C and 30°C.

In some other embodiments the ratio G'_{@150°C}/ G'_{@30°C} is at least equal to 0.8, preferably at least equal to 1.

In some still other embodiments the ratio G'_{@125°C}/G'_{@30°C} is at least equal to 0.9 with G'_{@125°C} being the G'value measured at 125°C.

It is another object of the invention to disclose a process for preparing the thermoplastic composition according to the invention generally comprising the steps of:
- providing a mixture (M1) comprising the polysiloxane (P1) as previously defined and a liquid L₁,
- providing a mixture (M2) comprising the polysiloxane (P2) as previously defined and a liquid L₂,
- mixing the mixture (M1) with the mixture (M2) under stirring so as to obtain a mixture (M3),
- removing the liquids L₁ and L₂ from the mixture (M3).

Generally, L₁ and L₂ which may be the same or different are liquids selected from the list consisting of water, methanol, ethanol, n-propanol, isopropanol, butanol, acetone, methylethylketone, carbon tetrachloride, chloroform, methylene chloride, ethylacetate, diethylether, tetrahydrofuran, benzene, toluene, xylene and of mixtures thereof.

In some preferred embodiments, L₁ and L₂ are mixtures of liquids consisting of at least one liquid, selected from the list consisting of acetone, methylethylketone, carbon tetrachloride, chloroform, methylene chloride, ethylacetate, diethylether, tetrahydrofuran, benzene, toluene and xylene and at least one liquid selected from the list consisting of water, methanol, ethanol, n-propanol, isopropanol and butanol.

In some still preferred embodiments, L₁ and L₂ are mixtures of liquids consisting of at least one liquid selected from the list consisting of methylethylketone, chloroform, methylene chloride, ethylacetate, diethylether, tetrahydrofuran and toluene and at least one liquid selected from the list consisting of water, methanol and ethanol.

In further preferred embodiments, L₁ and L₂ are mixtures of liquids consisting of at least one liquid selected from the list consisting of chloroform, methylene chloride and tetrahydrofuran and at least one liquid selected from the list consisting of water, methanol and ethanol.

Good results were obtained with L₁ and L₂ mixtures consisting of chloroform and methanol.

The mixtures of liquids L₁ and L₂ consisting of chloroform and methanol suitable for preparing the thermoplastic composition according to the invention generally comprise at least 1 wt.%, preferably at least 5 wt.% and more preferably at least 8 wt.% of methanol. Besides, the mixtures generally comprise at most 30 wt.%, preferably at most 20 wt.% and more preferably at most 15 wt.% of methanol.

The mixtures L₁ and L₂ suitable for preparing the thermoplastic composition according to the invention generally comprise at least 70 wt.%, preferably at least 80 wt.% and more preferably at least 85 wt.% of chloroform. Besides, the mixtures generally comprise at most 99 wt.%, preferably at most 95 wt.% and more preferably at most 90 wt.% of chloroform.

The mixture (M1) generally comprises at least 5 g.l⁻¹ of polysiloxane (P1), preferably at least 10 g.l⁻¹ and more preferably at least 50 g.l⁻¹. Besides, the mixture (M1) generally comprises at most 600 g.l⁻¹ of polysiloxane (P1), preferably at most 400 g.l⁻¹, more preferably at most 300 g.l⁻¹ and even more preferably at most 260 g.l⁻¹.

In some embodiments the polysiloxane (PI) is partially soluble in the liquid L₁ of the mixture (M1).

In some preferred embodiments the polysiloxane (PI) is completely soluble in the liquid L₁.

The mixture (M1) according to the invention may comprise at least one other ingredient; for example, it may comprise a stabilizer, a filler, a plasticizer or a processing aid. Good results can be obtained with mixture (M1) composed essentially of (i.e. comprising an amount of other ingredient not exceeding 0.5 wt. % based on the total weight of the mixture), or even composed of the polysiloxane (P1) and of the liquid L₁.

The mixture (M2) generally comprises at least 5 g.l⁻¹ of polysiloxane (P2), preferably at least 10 g.l⁻¹ and more preferably at least 50 g.l⁻¹. Besides, the mixture (M2) generally comprises at most 600 g.l⁻¹ of polysiloxane (P2), preferably at most 400 g.l⁻¹, more preferably at most 300 g.l⁻¹ and even more preferably at most 260 g.l⁻¹.

In some embodiments the polysiloxane (P2) is partially soluble in the liquid L₂ of the mixture (M2).

In some preferred embodiments the polysiloxane (P2) is completely soluble in the liquid L₂.

The mixture (M2) according to the invention may comprise at least one other ingredient; for example, it may comprise a stabilizer, a filler, a plasticizer or a processing aid. Good results can be obtained with mixture (M2) composed essentially of (i.e. comprising an amount of other ingredient not exceeding 0.5 wt. % based on the total weight of the mixture), or even composed of the polysiloxane (P2) and of the liquid L₂.

The mixture (M3) is obtained by stirring mixture (M1) with mixture (M2) at a temperature generally of at least 10 °C, preferably of at least 15 °C and more preferably of at least 20 °C. Besides, the mixture (M3) is obtained by stirring mixture (M1) with mixture (M2) at a temperature generally of at most 50 °C, preferably of at most 40 °C and more preferably of at most 30 °C.

Stirring of (M1) with (M2) is performed for a duration generally of at least 0.5 minute, preferably of at least 1 minutes, more preferably of at least 2 minutes and even more preferably of at least 5 minutes. Besides, stirring of (M1) with (M2) is performed for a duration generally of at most 120 minutes, preferably of at most 60 minutes, more preferably of at most 45 minutes and even more preferably of at most 30 minutes. Good results were obtained when stirring (M1) with (M2) during 30 minutes.

Just for sake of example, the mixture (M3) can be obtained by stirring of mixture (M1) with mixture (M2) in a vessel equipped with mechanical stirring equipment. In some embodiment this mechanical stirring is accompanied by further sonication.

In some embodiments the polysiloxane (P1) and the polysiloxane (P2) are partially soluble in the liquid comprising L₁ and L₂ of the mixture (M3).

In some preferred embodiments the polysiloxanes (PI) and (P2) are completely soluble in the liquid comprising L₁ and L₂ of the mixture (M3).

Removing the liquids L₁ and L₂ from the mixture (M3) is generally obtained by distillation. Generally L₁ and L₂ are removed by heating the mixture (M3), preferably under reduced pressure.

It is also an object of the invention to disclose a process for preparing the thermoplastic composition according to the invention generally comprising the steps of:
- preparing under stirring and heating up to a temperature T a mixture (M) comprising a least one polysiloxane (P1) and at least one polysiloxane (P2),
- cooling the mixture to a temperature ranging from Tg1 to 50 °C so as to obtain the desired thermoplastic composition as a solid,
wherein T is ranging from (T_{C-O} - 50°C) to (T_{C-O} + 50°C) with T_{C-O} the temperature of the cross-over point of the composition determined by rheological measurements and Tg1 is the glass transition temperature of the polysiloxane (PI) measured by differential scanning calorimetry (DSC).

The mixture (M) can be obtained in any vessel or apparatus equipped with mechanical stirring and heating functionalities. For example, the mixture (M) can be obtained in a twin screw extruder and the desired composition can be recovered in solid form after cooling and, optionally, after being granulated by a process well known by the skilled person.

Generally cooling is performed until reaching a temperature ranging from Tg1 to 50 °C, preferably ranging from 0 °C to 35 °C and more preferably from 10 °C to 30°C, wherein Tg1 is the glass transition temperature of the polysiloxane (P1) measured by differential scanning calorimetry (DSC) by a procedure well-known by the skilled person.

It is another object of the invention to disclose a coating comprising the thermoplastic composition as previously described and as previously prepared. It is also another object of the invention to disclose the use of the thermoplastic composition as previously described and as previously prepared in sealing, in gaskets or in damping elements.

It is still another object of the invention to disclose the use of the thermoplastic composition as previously described for preventing or reducing ice formation on the coating according to the present invention.

It is still another object of the invention to disclose the use of the thermoplastic composition as previously described for causing self-healing of the coating according to the invention after the coating has been damaged.

### Examples

### Reagents and solvents

Telechelic amino-terminated polydimethylsiloxanes were supplied by Gelest (references DMS A-12 and DMS A-15). According to the provider, the molecular weight of DMS A-15 was 3000 g.mol⁻¹ and the molecular weight of DMS A-12 was 1000 g.mol⁻¹. The other reagents were purchased from Sigma-Aldrich, Acros or Alfa-Aesar. All chemicals were used as received without any further purification.

### ¹H and ¹³C Nuclear Magnetic Resonance (NMR)

The NMR spectra were recorded on a Brüker AV 400 MHz at 300 K. The solvents used were CDCl₃ or DMSO-d₆. The chemical shifts (δ) are expressed in ppm, using the signal of residual solvent as an intern reference. The signals multiplicity is indicated as follows: s (singulet), bs (broad singulet), d (doublet), m (multiplet).

### Thermal Gravimetric Analysis (TGA)

TGA experiments were performed under nitrogen on a Perkin Elmer TGA 4000 instrument to determine the thermal stability of the materials. 20-30 mg of product were analyzed in a ceramic crucible from 40°C to 800°C at 10°C/min. This first thermal analysis allows to determine the maximum temperature (Tₘₐₓ) for the rheological experiments (working temperature is selected 10 °C below the temperature at which the sample exhibits a weight loss of 1 wt. %).

### Differential Scanning Calorimetry (DSC)

DSC experiments were performed under nitrogen on a Perkin Elmer DSC 8000 instrument in order to determine the melting/crystallization temperatures (Tm, Tc) and the glass transition temperature (Tg) of the materials. 5-8 mg of product were analyzed in an aluminum crucible. Three heating/cooling cycles were performed between -60°C and Tmax (determined by TGA). The first cycle at 10°C/min allows erasing the thermal history of the sample. The second and third cycles were performed at 10°C/min and 40°C/min, respectively.

### Rheology characterization

The rheological properties were investigated on ARES G2 instrument, equipped with parallel plates geometry (diameter 25 mm or 50 mm). The linear domain was firstly determined, and a temperature sweep at 10 rad/s between 25 °C and Tₘₐₓ at 2°C/min was acquired. Finally, angular frequency sweep at different temperatures were performed allowing the construction of Time-Temperature-Superposition (TTS) mastercurves.

### Preparation of UPy-PDMS3000-UPy

The telechelic end-grafting of PDMS chains by an ureiodopyrimidinone moiety (UPy) was carried out following an adapted experimental procedure from the work described by R. P. Sijbesma et al. (Macromolecules 2007, 23, 8464) according to the reaction scheme below.

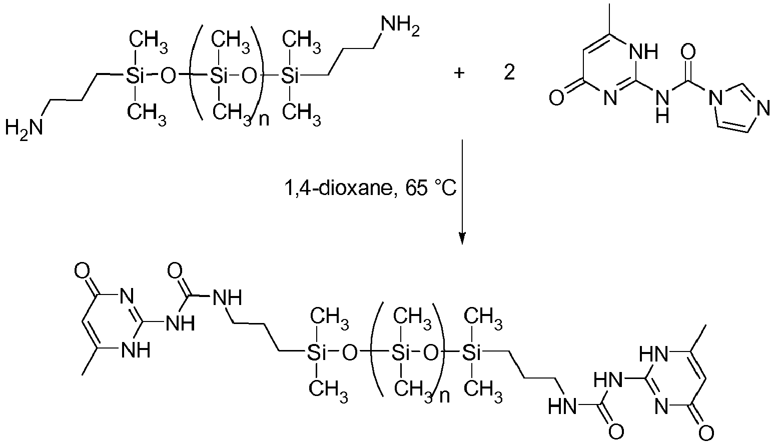

In a round bottomed flask, 7.80 g (35.58 mmol) of UPy-CDI (N-(6-methyl-4-oxo-1,4-dihydropyrimidm-2-yl)-1H-imidazole-1-carboxamide) were added to a solution of 41.01 g (13.67 mmol) of PDMS-diamine (DMS A-15) in 100 ml of anhydrous dioxane. The resulting suspension was stirred at 65 °C for 6 hours. Complete functionalization of the polymer was confirmed by the absence of any primary amine in the reaction mixture through amine titration method. The reaction mixture was cooled down to room temperature and diluted by adding 100 mL of distilled water. The polymer was extracted with 3x100 mL dichloromethane. The combined organic phase was washed with 3x150 mL water and dried over anhydrous sodium sulfate. Then, 50 ml of petroleum ether was added to the organic phase. The organic phase was filtered through celite using a sintered funnel and the filtrate concentrated under vacuum. Final drying under high vacuum gave thick gummy mass with 85% yield.

¹H NMR (400 MHz, CDCl₃): δ 13.14 (s, 2H), 11.85 (s, 2H), 10.19 (br s, 2H), 5.79 (s, 2H), 3.21(t, 4H, J= 8Hz), 1.65 (s, 6H), 1.62-1.58 (m, 4H), 0.59-0.55 (m, 4H), 0.06 (m, 240 H).

¹³C NMR (100 MHz, CDCl₃): 173.2, 156.8, 155.0, 148.3, 106.9, 43.3, 23.7, 19.1, 15.7, 1.4, 1.2.

The ratio of the integration of the ¹H NMR signal assigned to protons of CH₃-Si groups at 0.06 ppm (120H) with the integration of the ¹H NMR singulet signal assigned to proton of =CH-(C=O) group of UPy at 5.79 ppm (2H) allows to determine the value of n in the formula proposed on the reaction scheme above i.e. n = 18. This value is confirmed when considering the integration of the ¹H NMR multiplet signal assigned to protons of central -CH₂- group of -CH₂-**CH₂**-CH₂- at 1.62-1.58 ppm (4H) and the ¹H NMR signal assigned to protons of CH₃-Si groups.

### Synthesis of Thymine-1-Acetic acid

Thymine-1-acetic acid was prepared according to the reaction scheme below:

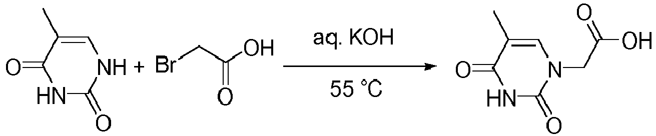

In a 500 ml round bottomed flask, 20.0 g (158.6 mmol) of thymine were dissolved in 100 ml of a 0.7 M KOH aqueous solution was heated at 50 °C for 10 minutes under stirring. 36 g (259.1 mmol) of bromoacetic acid dissolved in 50 ml of water were added dropwise to the thymine solution and the reaction mixture was stirred at 55 °C overnight. After cooling to room temperature, the reaction mixture was acidified to pH ∼2-3 by adding dilute HCl leading to the formation of a precipitate. The mixture was kept at 2-3 °C for 3 hours and the precipitate was filtered, and washed with water and methanol thoroughly, and dried under high vacuum to obtain thymine-1-acetic acid as white powder in 52% yield.

1H NMR (400 MHz, DMSO-d6): δ 13.21-13.01 (br s, 1H), 11.35 (s, 1H), 7.49 (s, 1H), 4.36 (s, 2H), 1.75 (s, 3H).

### Preparation of Thy-PDMS3000-Thy

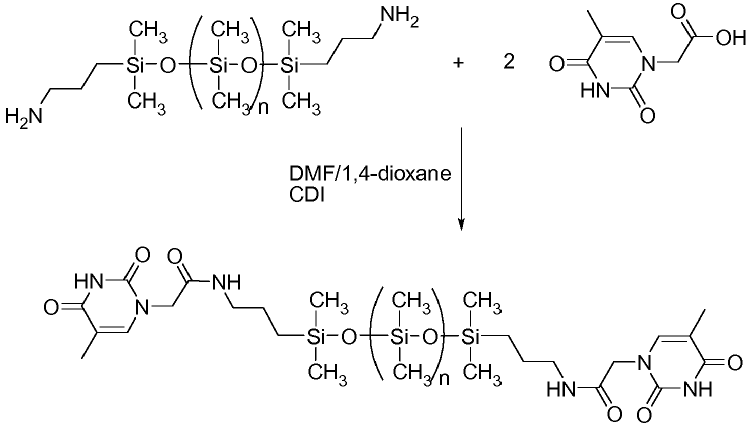

4.38 g (27 mmol) of carbonyldiimidazole (CDI) were added to a suspension of 4.97 g (27 mmol) of thymine-1-acetic acid in 40 ml of dry DMF and the mixture was stirred at room temperature for 1 hour. Then a solution of 30 g (10 mmol) of PDMS-diamine (DMS-A15) in 40ml of anhydrous dioxane was added and the reaction medium was stirred at room temperature overnight. The reaction medium was concentrated under vacuum and diluted with 150 ml of distilled water. The polymer was extracted with 3 x 150 ml of dichloromethane and the combined organic phase was washed with 5 % aqueous LiCl solution, and finally with water. The organic phase was dried over anhydrous sodium sulfate before being filtered and concentrated under vacuum. Finally, the resulting solid compound was dried under high vacuum to give the desired material in 85 % yield.

¹H NMR (400 MHz, CDCl₃): δ 9.70 (br s, 2H), 7.20 (s, 2H), 6.80 (br s, 2H), 4.29 (s, 4H), 3.21 (m, 4H), 1.91 (s, 6H), 1.51 (m, 4H), 0.51 (m, 4H), 0.06 (m, 240H). The ratio of the integration of the ¹H NMR signal assigned to protons of CH₃-Si groups at 0.06 ppm (240H) with the integration of the ¹H NMR singlet signal assigned to protons of -CH₃- group of Thy at 1.91 ppm (6H) allows to determine the value of n in the formula proposed on the reaction scheme above i.e. n = 38. This value is confirmed when considering the integration of the ¹H NMR multiplet signal assigned to protons of central -CH₂- group of -CH₂-**CH₂**-CH₂- at 1.51 ppm (4H) and the ¹H NMR signal assigned to protons of CH₃-Si groups.

### Preparation of DAT-PDMS1000-DAT

The telechelic end-grafting of PDMS chains by diaminopyrazine moiety (DAT) was carried out following the reaction scheme below:

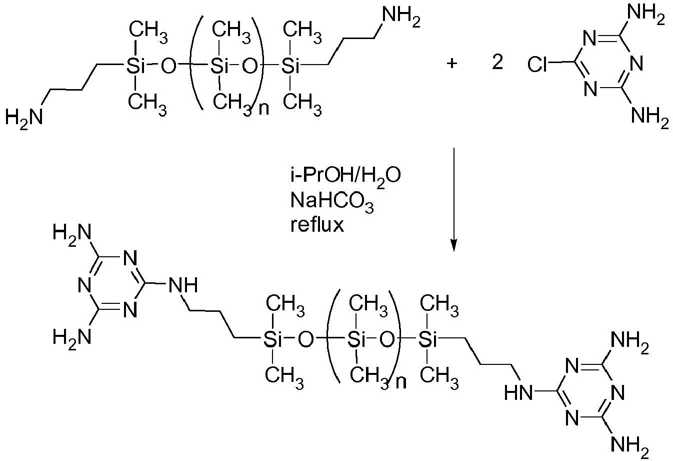

In a 500 ml round bottomed flask, 31.1 g (31.1 mmol) of PDMS-diamine (DMS-A12) were dissolved in 75 ml of 2-propanol. Then 11.31 g (77.7 mmol) of 2-Chloro-4,6-diamino-1,3,5-triazine were added, followed by the addition of 75 ml of an aqueous solution containing 13 g of sodium bicarbonate. The reaction mixture was stirred at 85 °C for 24 hours. After cooling, the reaction mixture was concentrated under vacuum and the product extracted with 3 X 100 ml of toluene. The combined organic phase was washed with water and dried over anhydrous sodium sulfate. The suspension was filtered through celite using a sintered funnel and the filtrate was concentrated and dried under vacuum to give the desired product in 83% yield.

### Preparation of DAT-PDMS3000-DAT

In a 500 ml round bottomed flask, 99.9 g (33.3 mmol) of PDMS-diamine (DMS-A15) were dissolved in 200 ml of 2-propanol. Then 12.20 g (83.8 mmol) of 2-Chloro-4,6-diamino-1,3,5-triazine were added, followed by the addition of 200 ml of an aqueous solution containing 15 g of sodium bicarbonate. The reaction mixture was stirred at 85 °C for 24 hours. After cooling, the reaction mixture was concentrated under vacuum and the product extracted with 3 X 150 ml of toluene. The combined organic phase was washed with water and dried over anhydrous sodium sulfate. The suspension was filtered through celite using a sintered funnel and the filtrate was concentrated and dried under vacuum to give the desired product as viscous liquid in 83% yield.

¹H NMR (400 MHz, CDCl₃): δ 5.22-5.12 (br m, 10H), 3.30-3.25 (m, 4H), 1.53 (quint, 4H, J=8Hz), 0.54-0.50 (m, 4H), 0.05 (m, 240H).

¹³C NMR (100 MHz, CDCl₃): 167.7, 167.3, 166.8, 43.9, 23.8, 15.6, 1.6, 1.4, 1.3, 0.9,0.3.

The ratio of the integration of the ¹H NMR signal assigned to protons of CH₃-Si groups at 0.05 ppm (240H) with the integration of the ¹H NMR broad multiplet signal assigned to protons of -NH₂ and-NH- groups of at 5.22-5.12 ppm (10H) allows to determine the value of n in the formula proposed on the reaction scheme above i.e. n = 38. This value is confirmed when considering the integration of the ¹H NMR quintuplet signal assigned to protons of central -CH₂-group of -CH₂-**CH₂**-CH₂- at 1.53 ppm (4H) and the ¹H NMR signal assigned to protons of CH₃-Si groups.

### Synthesis of benzyl 2-(2,4,6-trioxo-1,3,5-triazinan-1-yl)acetate

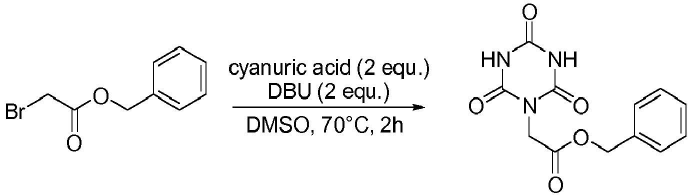

To a 3L double-jacketed glass reactor equipped with a condenser, a mechanical stirrer with four inclined blades, and a temperature probe were added under inert atmosphere 166.5 g (1.29 mol, 2 equ.) of cyanuric acid, 1120 g of dimethylsulfoxide and 196.4 g (1.29 mol, 2 equ.) of 1,8-diazabicyclo[5.4.0]undec-7-ene (DBU). The suspension was heated to 70 °C and stirred at this temperature until complete dissolution. Then 147.75 g (0.645 mol, 1 equ.) of benzyl-2-bromoacetate were added dropwise over 15 minutes and the reaction mixture was stirred at 70 °C for 2 hours. After cooling to 15 °C, 1000 g of water were added to precipitate the excess of cyanuric acid. The solid was filtered off and the filtrate was extracted with 4 X 950 g of ethyl acetate. The combined organic extracts were concentrated under reduced pressure to give an oily product which was precipitated by the addition of 200 g of water. The resulting solid was washed with water to remove residual amount of dimethylsulfoxide and dried at 75 °C under reduced pressure. The solid was finally washed with 3 X 1000g of dichloromethane and 2 X 500 g of toluene to remove the undesired di- and tri-substituted byproducts. After drying at 75 °C for 12 hours under reduced pressure, the expected monosubstituted product was obtained in 35% yield as a white powder.

¹H (400MHz, DMSO-d₆) δ 11.70 (s, 2H, NH), 7.34-7.39 (m, 5H, Ph), 5.19 (s, 2H, CH₂-Ph), 4.49 (s, 2H, N-CH₂);

¹³C (100MHz, DMSO-d₆) δ 167.56, 149.41, 148.29, 135.47, 128.40, 128.14, 127.85, 66.45, 41.54.

### Synthesis of isocyanuric-monoacetic acid

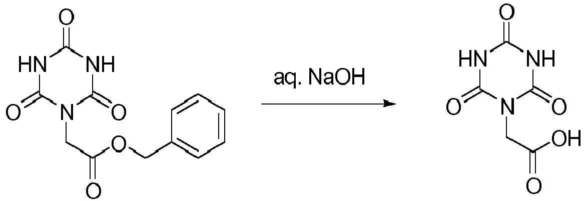

5g (18 mmol) of benzyl 2-(2,4,6-trioxo-1,3,5-triazinan-1-yl)acetate were dissolved in an aqueous solution containing 3.6 g of sodium hydroxide in 150 ml of water. The reaction mixture was stirred overnight at room temperature before being acidified to pH ∼1 by the addition of 6N HCl. After concentration by removing water under reduced pressure a precipitate appeared. Then THF was added and the mixture was stirred to extract the product into organic phase. The combined organic phase was dried over anhydrous sodium sulfate and filtered. The filtrate was concentrated and dried under reduced pressure to give isocyanuric-monoacetic acid in quantitative yield.

¹H NMR (400 MHz, DMSO-d₆): δ ppm: 11.68 (s, 2H), 4.31 (s, 2H).

### Preparation of ICA-PDMS3000-ICA

The telechelic end-grafting of PDMS chains by isocyanuric acid moiety (ICA) was carried out following the reaction scheme below:

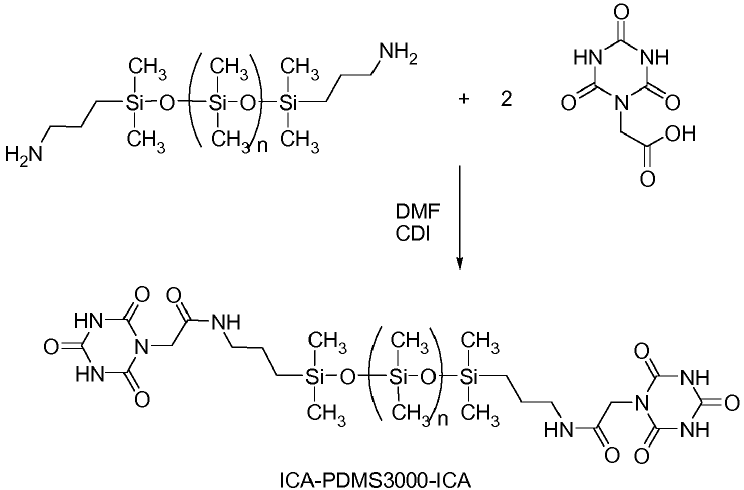

3.18 g (17 mmol) of isocyanuric-monoacetic acid were dissolved in 50 ml of DMF. Then, 2.76 g (17 mmol) of carbonyldiimidazole (CDI) were added and the reaction mixture was stirred for 30 minutes at room temperature. 21 g (7 mmol) of PDMS-diamine (DMS-A15) were added and the reaction mixture was stirred overnight at room temperature before being diluted with 150 ml of 1:1 (vol.:vol) ethylacetate/dichloromethane. The organic phase was washed with water and with a 5 wt. % aqueous solution of LiCl. The organic phase was dried over anhydrous sodium sulfate and filtered through celite using a sintered funnel. The filtrate was concentrated and dried under vacuum to give the desired product in 89% yield.

¹H NMR (400 MHz, CDCl₃): δ 7.85 (br m, 2H), 4.45 (s, 4H), 3.21 (m, 4H), 1.55 (m, 4H), 0.59 (m, 4H), 0.06 (m, 240).

The ratio of the integration of the ¹H NMR signal assigned to protons of CH₃-Si groups at 0.06 ppm (240H) with the integration of the ¹H NMR signal assigned to protons of -CH₂- group of -(C=O)**CH₂**-N at 4.45 ppm (4H) allows to determine the value of n in the formula proposed on the reaction scheme above i.e. n = 38. This value is confirmed when considering the integration of the ¹H NMR multiplet signal assigned to protons of central -CH₂- group of -CH₂-**CH₂**-CH₂- at 1.55 ppm (4H) and the ¹H NMR signal assigned to protons of CH₃-Si groups.

### Preparation of supramolecular materials

The supramolecular materials were prepared by solution casting using a methanol/chloroform mixture as the solvent. Accordingly, a blend comprising DAT-PDMS3000-DAT and ICA-PDMS3000-ICA in 1/1 molar ratio was prepared as follows:
2.57 g (0.8 mmol) of DAT-PDMS3000-DAT were dissolved under stirring for 30 minutes at 25 °C in 10 ml of a mixture composed of 10 wt. % of methanol and 90 wt. % of chloroform to give a solution (A). In paralell, 2.67 g (0.8 mmol) of ICA-PDMS3000-ICA were dissolved under stirring for 30 minutes at 25 °C in 10 ml of a mixture composed of 10 wt. % of methanol and 90 wt. % of chloroform to give a solution (B). Solutions A and B were mixed together and stirred for 30 minutes at 25 °C to give a new solution (C). The solution (C) was concentrated to dryness under reduced pressure leading to a solid supramolecular material that was ready for rheological characterization.

A blend comprising DAT-PDMS1000-DAT and ICA-PDMS3000-ICA in 1/1 molar ratio, a blend comprising DAT-PDMS3000-DAT and ICA-PDMS3000-ICA in 2/1 molar ratio and a blend comprising DAT-PDMS3000-DAT and THY-PDMS3000-THY in 1/1 molar ratio were prepared in a similar way.

### Rheological properties

In Table 1 are reported the rheological properties of compositions according to the invention or of control compositions which were prepared as described hereabove.

**Table 1**

| Composition | Molar ratio | Cross-over point T_{C-O} (°C) | Storage modulus G' at plateau's vicinity (Mpa) | Broadness of rubbery plateau (°C) |
|---|---|---|---|---|
| Comparative 1 PDMS 140000 | n.a. | <<0 | n.a. | n.a. |
| Comparative 2 Upy-PDMS3000-Upy | n.a. | 25 | 0.1 | n.a. |
| Comparative 3 DAT-PDMS3000-DAT Thy-PDMS3000- Thy | 1:1 | 39 | 0.75 | n.a. |
| Example 1 DAT-PDMS3000-DAT ICA-PDMS3000- ICA | 1:1 | 194 | 1.3 | 305 |
| Example 2 DAT-PDMS3000-DAT ICA -PDMS3000-ICA | 2:1 | 191 | 0.36 | 290 |
| Example 3 DAT-PDMS1000-DAT ICA -PDMS3000-ICA | 1:1 | 195 | 2.6 | 305 |

| | | | | |
|---|---|---|---|---|
| (*) non supramolecular reference: high molecular weight PDMS (140000 g/mol) from Wacker (AK 1000000 silicon oil). Rheology data taken from: Kökuti et al. Inter. J. Eng. 2011, 2, 177. | | | | |

The cross-over point (°C) was determined on the temperature sweep curve at the temperature where the curve representing modulus G' and the curve representing modulus G" cross. It denotes the temperature at which the physical crosslinkers (which assume the cohesion of the system) dissociate.

Broadeness of Rubbery Plateau (°C) was measured on the temperature sweep curve and covers the range of temperatures comprised between the glass transition temperature (Tg) and the temperature of dissociation T_{C-O} (cross-over point).

It appears from the results reported in Table 1 that supramolecular interactions through hydrogen bonding in the examples of compositions according to the invention is responsible for the improvement of the rheological properties of low Tg materials such as polysiloxanes, in particular such as PDMS. Indeed, while the reference PDMS of comparative example 1 has the viscosity of water at room temperature, the compositions of DAT-PDMS-DAT with ICA-PDMS-ICA of examples 1 to 3 demonstrate a high cohesive reinforcement due to hydrogen bonding up to temperatures surprisingly as high as 195 °C. Moreover, the reversible nature of the hydrogen bondings responsible for these performances makes these materials advantageously reprocesssable like thermoplastic materials. The composition of example 1 also provides a very high viscoelastic behavior with a η* = 2.10⁵ Pa.s at 150°C.

The supramolecular interactions through hydrogen bonding in compositions containing DAT-PDMS-DAT and THY-PDMS-THY (see comparative example 3) are also responsible for an improvement of the rheological properties but the temperature of dissociation of the assembly (cross-over) is observed at much lower temperature i.e. at a temperature of roughtly 40 °C. It is worth concluding that the materials obtained with the compositions according to the invention reach rheological performances that allow a larger range of temperature of use than materiasl obtained in comparative examples.

The inventors have shown that the crosslink density can be advantageously controlled by changing the length of the DAT-PDMS-DAT while keeping constant the molar ratio with ICA-PDMS-ICA. Accordingly, the crosslinking density of the composition of example 3 is higher than the crosslinking density of the composition of example 1 because of the use of a DAT-PDMS-DAT of lower molecular weight (1k vs 3k). The inventors have demonstrated by comparing the values of the storage modulus of compositions of examples 1 and 3 that changing the crosslink density of the compositions allows tuning the mechanical properties of the materials. Accordingly, the modulus of the composition of example 3 (higher crosslink density) is 2.6 Mpa while the modulus of the composition of example 1 (lower crosslink density) is only 1.3 Mpa. Besides, the temperature of dissociation T_{C-O} is surprisingly maintained to 195 °C for both compositions.

The inventors have shown that changing the molar ratio of DAT-PDMS-DAT and ICA-PDMS-ICA allows tuning the mechanical properties of the material. This is illustrated by comparing the results of example 1 and example 2. Indeed, the modulus of the composition of example 1 (molar ratio 1:1) is 1.3 Mpa while the modulus of the composition of example 2 (molar ratio 2:1) is only 0.36 Mpa. Besides, the temperature of dissociation T_{C-O} is surprisingly maintained close to 195 °C for both compositions.

UPY-PDMS-UPY (comparative example 2) gives some supramolecular association by self association of the Upy group. However the dissociation temperature of the supramolecular network is only 25 °C that rather limits the range of temperature of use of the material.

Moreover TGA study of UPY-PDMS-UPY reveals thermal degradation of the end groups above 170 °C that does not make UPY-PDMS-UPY a good candidate for high temperature processing.

Surprisingly, the ICA-PDMS-ICA according to the invention remains liquid at room temperature and does not exhibit any evidence of self association. This may be advantageous for an easy handling of the product at room temperature. Moreover, TGA study performed on the compositions DAT-PDMS-DAT and ICA-PDMS-ICA according to the invention give evidence for thermal stability up to 220 °C which is suitable for procesing a composition showing a cross over at 195°C.

The broadeness of Rubbery Plateau (°C) is surprisingly very large, at least 290 °C, for the compositions according to the invention.

Moreover, it can be seen from results compiled in table 2 that when when the molar ratio of the composition is 1:1 the storage modulus G' remains high and is surprisingly even increasing with temperature increasing from 30 °C to 150 °C. Accordingly, G'_{@150°C}/ G'_{@30°C} is equal to 1.40 for Example 1 and G'_{@150°C}/ G'_{@30°C} is equal to 1.14 for Example 3. For comparative examples 2 and 3 the value of G'_{@150°C}/ G'_{@30°C} not reported in table 2 are well below 0.1.

This behaviour is generally observed for unreversibly crosslinked polymers while for conventional high-temperature thermoplastic polymers the storage modulus generally decreases with temperature increasing leading to a G'_{@150°C}/ G'_{@30°C} which is below 0.8.

When the molar ratio of the composition is changed to 2:1, the storage modulus G' is almost constant for a temperature ranging from 30 °C to 125 °C (see Example 2) and G'_{@125°C}/ G'_{@30°C} is equal to 0.94.

**Table 2**

| | | Storage modulus G' (Mpa) | | | G'_{@150°C}/ G'_{@30°C} |
|---|---|---|---|---|---|
| | Molar ratio | at 30°C | at 125°C | at 150°C | |
| Example 1 DAT-PDMS3000-DAT ICA-PDMS3000-ICA | 1:1 | 1.3 | --- | 1.86 | 1.40 |
| Example 2 DAT-PDMS3000-DAT ICA -PDMS3000-ICA | 2 :1 | 0.36 | 0.34 | 0.05 | 0.15 |
| Example 3 DAT-PDMS1000-DAT ICA -PDMS3000-ICA | 1:1 | 2.6 | --- | 2.9 | 1.14 |

## Claims

1. A polysiloxane (P1) corresponding to formula (A) or (B) : 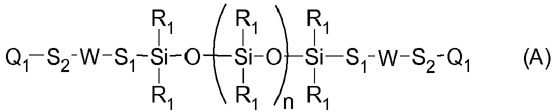 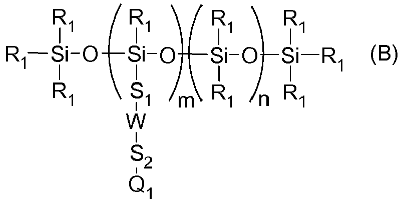
wherein each R₁ is independently selected from C₁-C₂₀ hydrocarbyl groups optionally substituted by a perfluoroalkyl group and,
wherein S₁ and S₂ which may be the same or different are nil or C₁-C₄₀ hydrocarbylene groups optionally interrupted by one or more heteroatom(s) or heteroatom-containing group(s) chosen from the list consisting of -O-, -S-, -CO-NH- and -NH-CO-NH- and,
wherein W is a divalent group selected from the list consisting of -CH₂-CH₂-, -*S-CH₂-CH₂-, -*CH₂-CH₂-S-, -*NH(C=O)-, -(*C=O)NH-, -*NR(C=O)-,-(*C=O)NR-, -(*C=O)O- and -*O(C=O)- wherein the atom designed with * is linked to S₁ and wherein R is a C₁₋C₈ alkyl group and,
wherein Q₁ is an isocyanuric or a barbituric acid moiety corresponding to formula (C): 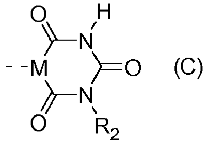 wherein 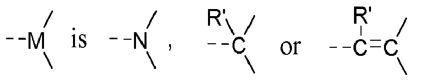 and,
wherein R' is H or a C₁-C₈ alkyl group and,
wherein R₂ is H or a C₁-C₂₀ hydrocarbyl group optionally comprising a carbonyl group and,
wherein n is an integer ranging from 5 to 4000 and,
wherein m is an integer such as the ratio n/m is ranging from 500 to 2.

2. The polysiloxane according to claim 1 wherein R₁ is a methyl group.

3. A process for preparing a polysiloxane (P1) corresponding to formula (A) as defined in claim 1 or 2 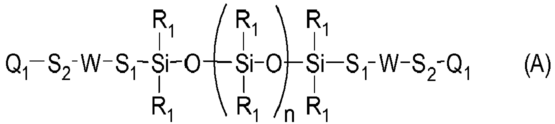 comprising the steps of :
- preparing a mixture comprising a polysiloxane of formula (P) and a molecule of formula (R), 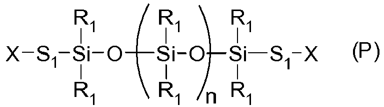 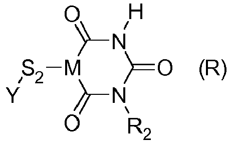
wherein X is a reactive groups bonded to the polysiloxane backbone via a spacer S₁ and,
wherein Y is a reactive group bonded to the isocyanuric or to the barbituric acid moiety corresponding to formula (C) via a spacer S₂ and capable of reacting with X to give a bridge W between S₁ and S₂ and,
- reacting group X with group Y so as to obtain the polysiloxane corresponding to formula (A).

4. A process for preparing a polysiloxane (P1) corresponding to formula (B) as defined in claim 1 or 2 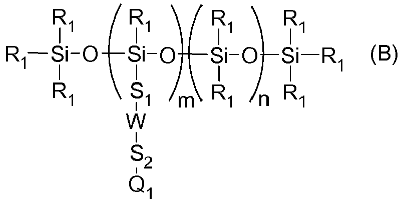 comprising the steps of :
- preparing a mixture comprising a polysiloxane of formula (Q) and a molecule of formula (R), 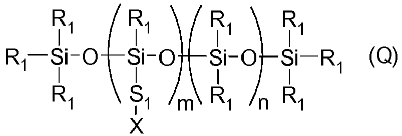 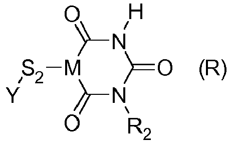
wherein X is a reactive groups bonded to the polysiloxane backbone via a spacer S₁ and,
wherein Y is a reactive group bonded to the isocyanuric or the barbituric acid moiety corresponding to formula (C) via a spacer S₂ and capable of reacting with X to give a bridge W between S₁ and S₂ and,
- reacting group X with group Y so as to obtain the polysiloxane corresponding to formula (B).

5. The process according to claim 3 or 4, wherein S₁ is nil, X is -H, Y is - CH=CH₂ and W is -CH₂-CH₂-.

6. The process according to claim 3 or 4, wherein X is -SH, Y is - CH=CH₂ and W is -*S-CH₂-CH₂-.

7. The process according to claim 3, wherein X is -NH₂, Y is -COOH and W is -*NH-(C=O)-.

8. A thermoplastic composition comprising :
- at least one polysiloxane (P1) chosen from polysiloxanes corresponding to formula (A) and polysiloxanes corresponding to formula (B), with formulae (A) and (B) as defined in claim 1 or 2, and
- at least one polysiloxane (P2) chosen from polysiloxanes bearing on both ends a nitrogen-containing heterocyclic group bearing at least a function chosen in the group consisting of primary amine and secondary amine or, bearing at least 2 of said nitrogen-containing heterocyclic groups as side chain pendant groups.

9. A thermoplastic composition comprising :
- at least one polysiloxane (P1) chosen from polysiloxanes corresponding to formula (A) and polysiloxanes corresponding to formula (B), with formulae (A) and (B) as defined in claim 1 or 2, and
- at least one polysiloxane (P2) chosen from polysiloxanes corresponding to formula (D) and polysiloxanes corresponding to formula (E), with formulae (D) and (E) as represented hereinafter : 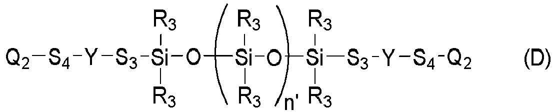 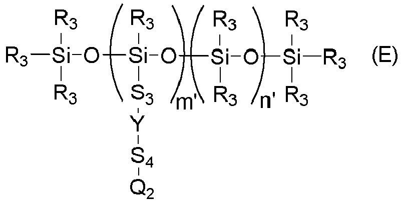
wherein each R₃ is independently selected from C₁-C₂₀ hydrocarbyl groups optionally substituted by a perfluoroalkyl group and,
wherein S₃ and S₄ which may be the same or different are nil or a C₁-C₄₀ hydrocarbylene groups optionally interrupted by one or more heteroatoms or heteroatom-containing groups chosen from the list consisting of -O-, -S-, -CO-NH-, -NH-CO-NH- and,
wherein Y is a divalent group selected from the list consisting of -NH-,-NR-, -CH₂-CH₂-, -*S-CH₂-CH₂-, -*CH₂-CH₂-S-, -*NH(C=O)-, -(*C=O)NH-,-*NR(C=O)-, -(*C=O)NR-, -(*C=O)O- and -*O(C=O)- wherein the atom designed with * is linked to S₃ and wherein R is a C₁-C₈ alkyl group and,
wherein Q₂ is a diaminotriazine moiety corresponding to formula (F): 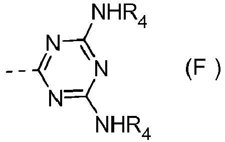
wherein R₄ is independently H or a C₁-C₂₀ hydrocarbyl group optionally comprising a carbonyl group and,
wherein n' is an integer ranging from 5 to 4000 and,
wherein m' is an integer such as the ratio n'/m' is ranging from 500 to 2.

10. The thermoplastic composition according to claim 9 wherein R₃ is a methyl group.

11. The thermoplastic composition according to claim 9 or 10 wherein the molar ratio between the at least one polysiloxane (P1) and the at least one polysiloxane (P2) is adjusted in such a way that the molar ratio between the cyanuric or babituric acid moieties and the diaminotriazine moieties ranges from 0.25 to 4.0.

12. A process for preparing the thermoplastic composition according to any one of claims 8 to 11 comprising the steps of:
- providing a mixture (M1) comprising the polysiloxane (P1) as defined in claim 1 or 2 and a liquid L₁,
- providing a mixture (M2) comprising the polysiloxane (P2) as defined in any one of claims 8 to 10 and a liquid L₂,
- mixing the mixture (M1) with the mixture (M2) under stirring so as to obtain a mixture (M3).

13. A process for preparing the thermoplastic composition according to any one of claims 8 to 11 comprising the steps of:
- preparing under stirring and heating up to a temperature T a mixture (M) comprising at least one polysiloxane (PI) and at least one polysiloxane (P2),
- cooling the mixture to a temperature ranging from Tg1 to 50 °C so as to obtain the desired thermoplastic composition as a solid,
wherein T is ranging from (T_{C-O} - 50°C) to (T_{C-O} + 50°C) with T_{C-O} the temperature of the cross-over point of the composition determined by rheological measurements and Tg1 the glass transition temperature of the polysiloxane (PI) measured by differential scanning calorimetry (DSC).

14. A coating comprising the thermoplastic composition according to any one of claims 8 to 11 or prepared by the process according to claim 12 or 13.

15. Material having a storage modulus G' at 150°C (G'_{@150°C}) and a storage modulus G' at 30°C (G'_{@30°C}) measured by rheology experiments such that G'_{@150°C}/ G'_{@30°C} is at least equal to 0.8 preferably at least equal to 1, **characterized in that** the material is the composition according to any one of claims 8 to 11.
